(19) Europäisches Patentamt
European Patent Office
Office européen des brevets

(11) **EP 3 060 887 B1**

(12) **EUROPÄISCHE PATENTSCHRIFT**

(45) Veröffentlichungstag und Bekanntmachung des Hinweises auf die Patenterteilung:
**26.07.2017 Patentblatt 2017/30**

(21) Anmeldenummer: **14803035.6**

(22) Anmeldetag: **20.10.2014**

(51) Int Cl.:
*G01D 5/245* *(2006.01)*     *G01B 3/00* *(2006.01)*
*G01D 5/347* *(2006.01)*

(86) Internationale Anmeldenummer:
**PCT/CH2014/000155**

(87) Internationale Veröffentlichungsnummer:
**WO 2015/058313 (30.04.2015 Gazette 2015/17)**

(54) **MASSVERKÖRPERUNG FÜR INKREMENTALGEBER SOWIE VERFAHREN ZU DEREN HERSTELLUNG**

MEASUREMENT SCALE FOR INCREMENTAL ENCODER AND METHOD FOR ITS MANUFACTURE

ÉCHELLE DE MESURE POUR CAPTEUR INCRÉMENTIEL ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2013 EP 13405121**

(43) Veröffentlichungstag der Anmeldung:
**31.08.2016 Patentblatt 2016/35**

(73) Patentinhaber: **Schneeberger Holding AG**
**4914 Roggwil (CH)**

(72) Erfinder:
• **LEHMANN, Christa**
**CH-3322 Mattstetten (CH)**
• **LEHMANN, Roger**
**CH-4566 Kriegstetten (CH)**

(74) Vertreter: **EGLI-EUROPEAN PATENT ATTORNEYS**
**Horneggstrasse 4**
**Postfach**
**8034 Zürich (CH)**

(56) Entgegenhaltungen:
**DE-A1- 10 226 444     DE-A1-102007 024 593**
**FR-A1- 2 267 538**

**Beschreibung**

Die vorliegende Erfindung betrifft eine Massverkörperung für Inkrementalgeber gemäss dem Oberbegriff des unabhängigen Patentanspruches 1. Darüber hinaus betrifft die Erfindung ein Verfahren zum Aufbringen einer derartigen Massverkörperung auf eine Metalloberfläche.

Demgemäss betrifft die Erfindung insbesondere eine Massverkörperung mit mindestens einer Inkrementalspur mit in Längsrichtung alternierend angeordneten Streubereichen und Spiegelbereichen. Die Streubereiche der mindestens einen Inkrementalspur weisen je eine Vielzahl im Wesentlichen runder Vertiefungen auf, welche dazu ausgebildet sind, einfallendes Licht diffus zu reflektieren. Dagegen weisen die Spiegelbereiche der mindestens einen Inkrementalspur eine im Wesentlichen glatte Oberfläche auf, welche dazu ausgebildet ist, einfallendes Licht spiegelnd zu reflektieren. Die Massverkörperung weist ferner einen Pitch auf, welcher sich aus einer Addition der Breite eines der Streubereiche und der Breite eines der Spiegelbereiche ergibt. Mit anderen Worten ist die Massverkörperung periodisch, wobei die Periodenlänge der Massverkörperung als Pitch definiert ist.

Mit Bezug auf den Pitch sei in diesem Zusammenhang ferner erwähnt, dass der Pitch generell durch die Geometrie der Sensorvorrichtung definiert wird, welche benutzt werden soll, um die Massverkörperung abzufahren. Damit ist der Pitch bei gegebenem Sensor eine Konstante der Massverkörperung. Lediglich die Breite der Streu- und Spiegelbereiche lässt sich demnach bis zu einem gewissen Grad variieren.

Derartige Massverkörperungen sind dem Prinzip nach aus dem Stand der Technik bekannt. Diese finden insbesondere bei Inkrementalgebern Anwendung. Hierbei handelt es sich um Sensoren zur Erfassung von Lageänderungen (linear) oder Winkeländerungen (rotierend), die eine Wegstrecke und Wegrichtung beziehungsweise Winkelveränderung und Drehrichtung erfassen können. Die bekannten Massverkörperungen von Inkrementalgebern weisen sich periodisch wiederholende Streubereiche auf, welche von einer Sensorvorrichtung gezählt werden um die Lageänderung zu erfassen.

So ist beispielsweise aus dem Dokument DE 2 515 574 eine Massverkörperung aus Metall bekannt, welche Streubereiche aus einer Vielzahl von Strichelementen aufweist. Die Strichelemente sind parallel, schmal und wenig tief, wobei deren Breite und Tiefe so bemessen sind, dass die Strichelemente eines Streubereiches in sichtbarem Licht nicht einzeln unterscheidbar sind, sondern nur durch ihr Beugungsbild erkennbar sind. Mit anderen Worten besteht jeder der aus der DE 2515574 bekannten Streubereiche aus einer Vielzahl von linienartigen, unmittelbar nebeneinander angeordneten Vertiefungen (Strichelementen) mit einer Breite in der Grössenordnung von einem Mikrometer (vorzugsweise 0.5-1.5 $\mu$m) und einer Tiefe, welche weniger als 1.5 $\mu$m beträgt und sich somit in der Grössenordung einer Wellenlänge des Lichts, mit welchem die bekannte Massverkörperung im Auflichtverfahren (z.B. unter einem fotoelektrischen Mikroskop) beleuchtet wird, befindet.

Wie es aus der DE 10 2007 007 311 ersichtlich ist, wird im Auflichtverfahren ein Lichtstrahl durch einen Kollimator auf eine mit einer reflektiven Massverkörperung versehene Oberfläche gelenkt, sodass die Oberfläche bzw. die Massverkörperung mit im Wesentlichen parallel gebündeltem Licht beleuchtet wird, wobei das Licht unter einem (Einfalls-)Winkel zur Oberflächennormalen einfällt. Die Massverkörperung umfasst dabei strukturierte Bereiche, welche mit diffraktiven Phasengitter-Strukturen in Form von Liniengittern strukturiert sind, und unstrukturierte Bereiche, welche jeweils durch eine glatte (spiegelnde) Oberfläche gebildet sind. Der Einfallswinkel des auf die Oberfläche einfallenden Lichts ist dabei vorzugsweise so gewählt, dass an den diffraktiven Phasengitter-Strukturen in strukturierten Bereichen Licht derart gebeugt wird, dass eine Beugungsordnung des gebeugten Lichts die Massverkörperung senkrecht verlässt. Unter diesen Umständen wird das auf die unstrukturierten Bereiche einfallende Licht jeweils an der Oberfläche reflektiert, sodass es die unstrukturierten Bereiche (im Folgenden auch "Spiegelbereiche" genannt) unter einem Ausfallswinkel zur Oberflächennormalen verlässt, welcher gleich dem Einfallswinkel ist. Das im Wesentlichen senkrecht zur Oberfläche an den strukturierten Bereichen gebeugte Licht wird sodann auf die Photosensoren einer Sensorvorrichtung abgebildet, wobei die Sensorvorrichtung vorzugsweise so angeordnet ist, dass das an den unstrukturierten Bereichen (Spiegelbereichen) reflektierte Licht nicht von den Photosensoren der Sensorvorrichtung erfasst wird. Demnach sind mittels der Sensorvorrichtung die strukturierten Bereiche als Hellfelder und die unstrukturierten Bereiche (Spiegelbereiche) als Dunkelfelder detektierbar. Wird die Sensorvorrichtung an der Inkrementalspur entlang verschoben, so erfasst die Sensorvorrichtung vor allem das an den strukturierten Bereichen gebeugte Licht (Dunkelfeldmessung der strukturierten Bereiche). Die strukturierten Bereiche und die unstrukturierten Bereiche (Spiegelbereiche) sind jeweils miteinander alternierend in einer Reihe hintereinander angeordnet und bilden gemeinsam eine Inkrementalspur. Die strukturierten Bereiche sind dabei in konstanten Abständen angeordnet und werden durch die Spiegelbereiche voneinander getrennt. Demzufolge wird durch jeden der strukturierten Bereiche jeweils eine sogenannte Marke gebildet, wobei die jeweiligen Marken der Inkrementalspur von der Sensorvorrichtung gezählt und in ein sich periodisch veränderndes Sensorsignal umgewandelt werden können, falls die Sensorvorrichtung relativ zu den Marken in Längsrichtung der Inkrementalspur bewegt wird. Das periodische Sensorsignal kann von einer Rechnereinheit dazu verwendet werden, die Verschiebung entlang der Massverkörperung zu berechnen. Da sich das Sensorsignal bei einer Bewegung der Sensorvorrichtung in Längsrichtung der Inkrementalspur periodisch verändert, ist es möglich, bei einer Bewegung der Sensorvorrichtung in Längsrichtung der Inkrementalspur an verschiedenen Positionen der Sensorvorrichtung das jeweilige Sensorsignal zu messen und somit verschiedenen Positionen der Sensorvorrichtung verschiedene Messwerte für das Sensorsignal zuzuordnen. Eine Interpolation zwischen verschiedenen Messwerten für die Sensorsignale, welche jeweils verschiedenen vorgegebenen Positionen der Sensorvorrichtung bezüglich der Inkrementalspur zugeordnet sind, ermöglicht schliesslich eine Bestimmung einer beliebigen Position der Sensorvorrichtung (zwischen jeweils zwei der vorgegebenen Positionen der Sensorvorrichtung) mit einer hohen Genauigkeit. Zur Erhöhung des Sensorsignals ist es möglich die Massverkörperung gleichzeitig mit Licht aus zwei verschiedenen Lichtquellen zu beleuchten, welche nebeneinander angeordnet sind, sodass Licht aus zwei verschiedenen Richtungen (jeweils unter einem Winkel zur Oberflächennormalen) auf die Oberfläche bzw. die Massverkörperung fällt.

Die vorstehend beschriebenen Massverkörperungen können zum hoch genauen linearen Verfahren von beispielsweise Werkstücken und/oder Werkzeugen, beispielsweise in Werkzeugmaschinen oder auch in beliebigen Handlingsystemen, eingesetzt werden. Zur Erzeugung der Massverkörperung werden dabei häufig Streubereiche in eine hoch reflektierende Oberfläche einer markierungsfähigen Schicht, beispielsweise einer hoch reflektierenden Metalloberfläche, eingebracht. Mit anderen Worten wird die hochreflektierende Metalloberfläche dabei durch hochenergetische Strahlung, wie beispielsweise Laserstrahlung, partiell aufgeraut, um Streubereiche innerhalb der Metalloberfläche vorzusehen. Dazu wird im Stand der Technik vorgeschlagen, die Streubereiche bspw. mit linienartigen Vertiefungen an der Metalloberfläche zu versehen. Im Einzelnen wird die Metalloberfläche dabei durch kurze Laserimpulse mit hochenergetischer Laserstrahlung angeschmolzen und teilweise durch Verdampfung abgetragen, wodurch Vertiefungen entstehen, die dazu ausgebildet sind einfallendes Licht diffus zu reflektieren.

Hierzu ist es beispielsweise aus der DE 19608937 A1 bekannt, einen Markierungsträger, bestehend aus einem Substrat und einer markierungsfähigen Schicht vorzusehen, wobei mit Hilfe von hochenergetischer Strahlung eine hochreflektierende Oberfläche der markierungsfähigen Schicht partiell aufgeraut wird, um die Massverkörperung zu erzeugen. Insbesondere wird die markierungsfähige Oberfläche dabei durch kurze Laserimpulse von der Dauer von etwa 20 Nanosekunden angeschmolzen, wonach es in den Impulspausen zur sofortigen Widererstarrung der Oberfläche kommt.

Die aus dem Stand der Technik bekannten Massverkörperungen haben jedoch den Nachteil, dass das von der Sensorvorrichtung erfasste Sensorsignal häufig nur einen geringen Kontrast aufweist, d.h. die Sensorvorrichtung erzeugt durch Abtastung der Streubereiche und der Spiegelbereiche jeweils Sensorsignale derart, dass ein durch Abtastung eines Streubereichs erzeugtes Sensorsignal und ein durch Abtastung eines Spiegelbereichs erzeugtes Sensorsignal sich verhältnismässig wenig unterscheiden und dementsprechend einen verhältnismässig kleinen Unterschied (Kontrast) aufweisen. Dies kann wiederum dazu führen, dass einzelne Streubereiche nicht ausreichend erkannt werden und die Verschiebung der Sensorvorrichtung gegenüber der Massverkörperung unzureichend erfasst wird. Ferner wird es bei den aus dem Stand der Technik bekannten Massverkörperungen als problematisch angesehen, dass die Sensorsignale, welche durch eine Reflexion an der Massverkörperung erhältlich sind, eine zu geringe Interpolierbarkeit aufweisen.

Auf Grundlage der oben genannten Problemstellung liegt der vorliegenden Erfindung die Aufgabe zugrunde, eine Massverkörperung anzugeben, mit welcher auf einfache Weise der Kontrast des Sensorsignals optimiert werden kann. Ferner sollen durch die Massverkörperung möglichst gut interpolierbare Sensorsignale erzeugt werden können.

Erfindungsgemäss wird diese Aufgabe durch eine Massverkörperung mit den Merkmalen des Patentanspruches 1 gelöst.

Diese Massverkörperung weist eine Inkrementalspur mit in Längsrichtung alternierend angeordneten Streubereichen und Spiegelbereichen auf, wobei die Streubereiche je mindestens zwei linienartige Vertiefungen aufweisen, welche sich im Wesentlichen senkrecht zur Längsrichtung der Inkrementalspur erstrecken und in der Längsrichtung der Inkrementalspur in einer Reihe hintereinander angeordnet sind und dazu ausgebildet sind, einfallendes Licht diffus zu reflektieren, wobei die Spiegelbereiche der Inkrementalspur eine im Wesentlichen glatte Oberfläche aufweisen, welche dazu ausgebildet ist, einfallendes Licht spiegelnd zu reflektieren, und wobei die Inkrementalspur ferner einen Pitch aufweist, welcher sich aus einer Addition der Breite eines der Streubereiche (in der Längsrichtung der Inkrementalspur) und der Breite eines der Spiegelbereiche (in der Längsrichtung der Inkrementalspur) ergibt.

Weiterhin weist jeder Streubereich, in Längsrichtung der Inkrementalspur, eine Breite auf, die kleiner als die Hälfte des Pitch ist, wobei jeweils zwei der linienartigen Vertiefungen eines Streubereichs an einander gegenüberliegenden Aussenseiten des einen Streubereichs angeordnet sind und die Breite des einen Streubereichs in Längsrichtung der Inkrementalspur begrenzen.

Die erfindungsgemässe Massverkörperung weist den Vorteil auf, dass durch die Verringerung der Breite der Streubereiche, gegenüber der Breite der Spiegelbereiche, der Kontrast signifikant gesteigert werden kann. Insbesondere wird durch die Verkleinerung in der Breite der Streubereiche erreicht, dass das diffus reflektierte Licht hauptsächlich auf die dafür vorgesehenen Photosensoren der Sensorvorrichtung abgebildet wird. Benachbarte Sensorfelder werden bei kleinen Streubereichen dagegen nur leicht betroffen, wodurch der Kontrast des Sensorsignals deutlich gesteigert wird

Gemäss der erfindungsgemässen Massverkörperung ist vorgesehen, dass die mindestens zwei linienartigen Vertiefungen der Streubereiche jeweils aus einer Vielzahl im Wesentlichen runder Vertiefungen ausgebildet sind, welche einander überlappend angeordnet sind. Mit anderen Worten, die Streubereiche bestehen aus einer Vielzahl im Wesentlichen runder Vertiefungen, welche überlappend miteinander in Verbindung stehen und zusammen linienartige Vertiefungen ausbilden.

Mit der Formulierung "im wesentlichen runde Vertiefungen" soll hierbei ausgedrückt werden, dass die runden Vertiefungen der Massverkörperung selbstverständlich keine perfekt runde Gestalt aufweisen. Dies liegt insbesondere darin begründet, dass die Vertiefungen, wie später mit Bezug auf das Verfahren im Detail erläutert, durch Laserpulse erzeugt werden. Selbstverständlich ist demnach die Form der Vertiefungen stark abhängig von den Eigenschaften der Metalloberfläche, des Lasers sowie den Umgebungsbedingungen beim Einbringen der Vertiefungen. Somit sind durch diese Formulierung auch elliptische sowie leicht eckige Vertiefungen erfasst. Daraus folgt gleichwohl, dass die linienartigen Vertiefungen, welche durch die überlappend angeordneten, runden Vertiefungen erzeugt werden nicht immer perfekt senkrecht gegenüber der Längsrichtung der Inkrementalspur ausgerichtet sein können. Somit ist auch die Formulierung "im Wesentlichen senkrechte linienartige Vertiefungen" so zu verstehen, dass aufgrund unterschiedlicher Ausgangsbedingungen leichte Abweichungen bei der Erzeugung der senkrechten Vertiefungen im Toleranzbereich der erfindungsgemässen Massverkörperung liegen.

Durch die spezielle Ausbildung der linienartigen Vertiefungen aus einer Vielzahl runder Vertiefungen ist die diffuse Reflexion des einfallenden Lichts im Wesentlichen auf die Längsrichtung der Inkrementalspur beschränkt. Dementsprechend lassen sich durch die Massverkörperung besonders verlässliche Sensorsignale erzeugen und ein Übersprechen der optischen Signale in benachbarte Sensorbereiche wirkungsvoll verhindern.

Nach einer weiteren Umsetzung ist es vorgesehen, dass sich die im Wesentlichen runden Vertiefungen zu mindestens 75% überlappen. Im Einzelnen bedeutet dies, dass jede der runden Vertiefungen mindestens 75% Ihres Flächeninhalts mit der nächsten Vertiefung gemeinsam hat. Es wird zwischen zwei benachbarten Vertiefungen also eine Schnittfläche ausgebildet, welche zumindest 75% des Flächeninhalts der einzelnen Vertiefungen entspricht. Schliesslich sei an dieser Stelle angemerkt, dass die linienartigen Vertiefungen der erfindungsgemässen Massverkörperung selbstverständlich nicht aus den eben erwähnten, im Wesentlichen runden Vertiefungen bestehen müssen; vielmehr können diese auch als kontinuierliche Rillen gebildet sein. Entscheidend ist lediglich, dass die linienartigen Vertiefungen Streubereiche ausbilden, welche eine Breite aufweisen, die nicht grösser als der halbe Pitch ist.

Es wurde ferner erkannt, dass die Breite der Streubereiche ein Minimum nicht unterschreiten sollte, um auch mit den verkleinerten Streubereichen eine ausreichende Lichtausbeute zu erhalten. Dementsprechend ist es gemäss einem weiteren Aspekt der erfindungsgemässen Massverkörperung vorgesehen, dass die Breite der Streubereiche grösser als 10% der Breite des Pitch ist. Mit anderen Worten, es wurde festgestellt, dass der Streubereich vorzugsweise eine Breite aufweist, welche zwischen 10% und 50% der Breite des Pitch liegt. Besonders gute Ergebnisse werden insbesondere dann erreicht wenn die Streubereiche eine Breite aufweisen, welche 30% bis 45% des Pitch, vorzugsweise 35% bis 40% des Pitch, und insbesondere etwa 38% des Pitch, entspricht.

Bei periodischen Massverkörperungen ist üblicherweise die Periodenlänge der Massverkörperung als Pitch definiert. Die Periodenlänge der Inkrementalspur der erfindungsgemässen Massverkörperung ergibt sich demnach, wie oben bereits erwähnt, aus einer Addition der Breite des Streubereichs (in der Längsrichtung der Inkrementalspur) und der Breite des Spiegelbereichs (in der Längsrichtung der Inkrementalspur). Gemäss einer weiteren Ausführungsform ist es vorgesehen, dass der Abstand zwischen zwei benachbarten parallelen, linienartigen Vertiefungen grösser als null ist, das heisst die linienartigen Vertiefungen grenzen nicht aneinander. Darüber hinaus ist der Abstand der linienartigen Vertiefungen demgemäss kleiner als die Hälfte des Pitch abzüglich dem zweifachen einer Breite der linienartigen Vertiefungen, in Längsrichtung der Inkrementalspur. Durch das Einhalten dieser Abstände zwischen den benachbarten parallelen linienartigen Vertiefungen wird der durch die Massverkörperung erzielbare Kontrast noch weiter erhöht.

Die oben stets erwähnte Erhöhung des Kontrastes ist essentiell für die Interpolierbarkeit der durch die Sensorvorrichtung erzeugten Sensorsignale. Jedoch wurde überraschenderweise festgestellt, dass durch die zunehmende Reduktion der Breite der Streubereiche die Interpolierbarkeit des Sensorsignals immer problematischer wird. Es hat sich gezeigt, dass Streubereiche, die jeweils eine vorgegebene Anzahl von mehreren linienartigen Vertiefungen aufweisen, zu einem Sensorsignal führen, welches bei einer Bewegung der Sensorvorrichtung in Längsrichtung der Inkrementalspur jeweils abhängig von der jeweiligen Position der Sensorvorrichtung variiert, wobei die jeweilige Variation des Sensorsignals sich auch als abhängig von der Breite der linienartigen Vertiefungen in der Längsrichtung der Inkrementalspur und/oder vom Abstand zwischen zwei benachbarten linienartigen Vertiefungen erweist.

So kann beispielsweise im Falle einer Inkrementalspur mit einem vorgegebenen Pitch durch eine Reduktion der Breite der Streubereiche in Längsrichtung der Inkrementalspur erreicht werden, dass das Sensorsignal der Sensorvorrichtung einen grösseren Kontrast zwischen einem Streubereich und einem an den Streubereich angrenzenden Spiegelbereich aufweist, d.h. die Reduktion der Breite der Streubereiche bei vorgegebenem Pitch kann zu einer Vergrösserung der Differenz zwischen einem durch Abtastung eines Streubereichs erzeugten Sensorsignals und einem durch Abtastung eines Spiegelbereichs erzeugten Sensorsignals führen. Diese Vergrösserung des Kontrasts erlaubt es an sich, das an den Streubereichen diffus reflektierte Licht mit einer grösseren Messgenauigkeit zu erfassen. Allerdings zeigt sich, dass das auf einen Streubereich einfallende Licht derart an den linienartigen Vertiefungen des jeweiligen Streubereichs diffus reflektiert wird, dass das diffus reflektierte Licht mehr oder weniger homogen bzw. inhomogen verteilt auf die Sensorvorrichtung trifft. Es zeigt sich dabei, dass das Ausmass der Homogenität bzw. der Inhomogenität der (räumlichen) Intensitätsverteilung des diffus reflektierten Lichts abhängig von verschiedenen Parametern ist, u.a. von der jeweiligen Breite der linienartigen Vertiefungen in der Längsrichtung der Inkrementalspur und/oder vom Abstand zwischen zwei benachbarten linienartigen Vertiefungen.

Wie nachfolgend noch näher erläutert wird, können bei einem vorgegebenen Pitch der Inkrementalspur die Breite der Streubereiche in der Längsrichtung der Inkrementalspur, die Breite der linienartigen Vertiefungen in der Längsrichtung der Inkrementalspur und/oder die jeweiligen Abstände zwischen zwei benachbarten linienartigen Vertiefungen so gewählt werden, dass das Sensorsignal der Sensorvorrichtung einerseits einen verhältnismässig grossen Kontrast zwischen einem Streubereich und einem an den Streubereich angrenzenden Spiegelbereich zeigt, dass aber andererseits die (räumliche) Intensitätsverteilung des an einem Streubereich diffus reflektierten Licht eine verhältnismässig grosse Inhomogenität aufweisen kann. Wird in diesem Fall die Sensorvorrichtung in der Längsrichtung der Inkrementalspur bewegt, so erzeugt die Sensorvorrichtung ein Signal, welches in Abhängigkeit von der Position der Sensorvorrichtung periodisch variiert, wobei die Variation des Signals als Funktion der Position der Sensorvorrichtung - wegen der verhältnismässig grossen Inhomogenität der Intensitätsverteilung des an einem Streubereich diffus reflektierten Lichts - relativ stark von einer sinusförmigen Variation (als Funktion der Position der Sensorvorrichtung bezüglich der Inkrementalspur) abweichen kann. Diese Abweichung der Variation des von der Sensorvorrichtung erzeugten Signals von einer sinusförmigen Variation erschwert eine genaue Interpolation zwischen verschiedenen Sensorsignalen, welche für verschiedene vorgegebene Positionen der Sensorvorrichtung bezüglich der Inkrementalspur bestimmt wurden. Letzteres erschwert eine genaue Bestimmung einer beliebigen Position der Sensorvorrichtung zwischen zwei vorgegebenen Positionen der Sensorvorrichtung mittels einer Interpolation eines vom Sensor erzeugten Signals zwischen zwei entsprechenden Signalen des Sensors, welche den zwei vorgegebenen Positionen der Sensorvorrichtung zugeordnet sind. Experimente zeigen, dass die (räumliche) Intensitätsverteilung des an einem Streubereich diffus reflektierten Licht insbesondere eine verhältnismässig grosse Inhomogenität aufweisen kann (und dementsprechend die Interpolierbarkeit der Signale der Sensorvorrichtung besonders stark erschwert sein kann), wenn die jeweiligen Abstände zwischen zwei benachbarten linienartigen Vertiefungen eines Streubereichs verhältnismässig klein sind (d.h. beispielsweise gegen 0 $\mu$m tendieren).

Um diesen Effekt zu kompensieren, wird gemäss einer weiteren Umsetzung der erfindungsgemässen Massverkörperung vorgeschlagen, dass die Streubereiche jeweils mindestens drei parallele, linienartige Vertiefungen aufweisen, welche senkrecht gegenüber der Längsrichtung der Inkrementalspur ausgerichtet sind. Die drei parallelen, linienartigen Vertiefungen sind dabei insbesondere in einem Abstand von 6 $\mu$m bis 9 $\mu$m, vorzugsweise 7,5 $\mu$m angeordnet.

Überraschenderweise zeigt sich, dass bei einer Vergrösserung des Abstands zwischen zwei benachbarten linienartigen Vertiefungen eines Streubereichs auf 6 $\mu$m bis 9 $\mu$m das an den mindestens drei parallelen, linienartigen Vertiefungen diffus reflektierte Licht derart überlagert, dass das an einem Streubereich diffus reflektierte Licht eine räumliche Intensitätsverteilung hat, welche verhältnismässig homogen ist. Letzteres hat den Vorteil, dass eine genaue Interpolation von Signalen der Sensorvorrichtung (für eine beliebige Position der Sensorvorrichtung zwischen zwei vorgegebenen Positionen der Sensorvorrichtung) vereinfacht wird.

Jede der linienartigen Vertiefungen kann in diesem Fall - in der Längsrichtung der Inkrementalspur - eine Breite von 3,5 $\mu$m bis 12 $\mu$m, vorzugsweise 6 $\mu$m bis 9 $\mu$m, und insbesondere etwa 7 $\mu$m, aufweisen. Die Breite einer der linienartigen Vertiefungen in der Längsrichtung der Inkrementalspur und die Abstände zwischen zwei benachbarten linienartigen Vertiefungen können demnach um ein Vielfaches grösser als die Wellenlänge des sichtbaren Lichts sein, welches vorzugsweise zum optischen Abtasten der Inkrementalspur verwendet werden kann. Unter diesen Umständen ermöglicht es die Erfindung, vorteilhafterweise eine Inkrementalspur mit einer periodischen Anordnung von Streubereichen, welche jeweils mindestens drei parallele, linienartige Vertiefungen aufweisen und wie vorstehend beschrieben ausgebildet sind, mit einer verhältnismässig grossen Länge von beispielsweise mehr als 1 Meter zu realisieren.

Alternativ oder zusätzlich hierzu kann eine homogene Intensitätsverteilung des diffus reflektierten Lichts entlang der Streubereiche auch dadurch erzeugt werden, dass die Streubereiche je mindestens eine verkürzte, linienartige Vertiefung mit einer ersten Länge aufweist, welche kürzer ist als eine zweite Länge von mindestens einer weiteren linienartigen Vertiefung. Mit anderen Worten, die linienartigen Vertiefungen aus denen die Streubereiche jeweils gebildet sind weisen unterschiedliche Längen senkrecht zur Längsrichtung der Inkrementalspur auf. Vorzugsweise befindet sich die verkürzte, linienarte Vertiefung in der Mitte des Streubereiches, während die an der Aussenseite liegenden linienartigen Vertiefungen die zweite, unverkürzte Länge aufweisen. Diese Ausgestaltung folgt insbesondere der Erkenntnis, dass die Lichtintensität in der Mitte des Streubereichs für gewöhnlich höher ausfällt als an deren Randbereich.

Die eben erwähnte, mindestens eine verkürzte, linienartige Vertiefung kann dabei beispielsweise einen gegenüber der mindestens einen weiteren, linienartige Vertiefung verkürzten Anfangs- und Endbereich aufweisen. Dementsprechend ist die mindestens eine verkürzte, linienartige Vertiefung noch immer mittig entlang der Längsachse der ersten Inkrementalspur ausgerichtet, weist jedoch eine verkürzte Länge gegenüber den verbleibenden linienartigen Vertiefungen auf. Alternativ oder zusätzlich ist es auch vorstellbar, dass die mindestens eine verkürzte, linienartige Vertiefung gegenüber der mindestens einen weiteren linienartige Vertiefung einen vorzugsweise zentralen Freiraum aufweist, welcher eine Unterbrechung zwischen einem Anfangs- und Endbereich der verkürzten linienartigen Vertiefung ausbildet. Mit anderen Worten ist die verkürzte, linienartige Vertiefung gemäss diesem Aspekt in zwei geteilt und weist einen zentralen Freiraum auf. Die verkürzte, linienartige Vertiefung befindet sich demnach lediglich am oberen und unteren Endbereich der ersten Inkrementalspur.

Nach einer weiteren Ausführungsform weist die erfindungsgemässe Massverkörperung ferner eine Referenzspur auf, welche parallel neben der ersten Inkrementalspur angeordnet ist. Die Referenzspur ist dabei insbesondere dazu ausgebildet, eine absolute Position eines Messkopfes entlang der Massverkörperung anzugeben. Zu diesem Zweck kann die Referenzspur in Längsrichtung alternierend angeordnete Referenzstreubereiche und Spiegelbereiche aufweisen. Ähnlich wie bereits im Zusammenhang mit der ersten Inkrementalspur erwähnt, können auch die Referenzstreubereiche der Referenzspur je eine Vielzahl linienartiger Vertiefungen aufweisen, welche dazu ausgebildet sind einfallendes Licht diffus zu reflektieren. Darüber hinaus können auch die Spiegelbereiche der Referenzspur eine im Wesentlichen glatte Oberfläche aufweisen. Um die jeweilige absolute Position des Messkopfes an einem beliebigen Ort zu bestimmen, kann beispielsweise eine Änderung der relativen Position (gemessen über die erste Inkrementalspur) des Messkopfes bezüglich einer bestimmten Referenzmarkierung (Referenzstreubereich) der Referenzspur, gemessen werden. Somit ist es durch die Referenzspur möglich, dass der Inkrementalgeber nicht nur seine Lageänderung, sondern auch die absolute Position erfasst.

Wie bereits erwähnt, ist die erfindungsgemässe Massverkörperung insbesondere dazu ausgebildet, in Verbindung mit einem optischen Inkrementalgeber verwendet zu werden. Ein derartiger optischer Inkrementalgeber weist zumindest eine erfindungsgemässe Massverkörperung sowie eine Sensorvorrichtung, welche dazu ausgebildet ist mindestens eine Inkrementalspur der Massverkörperung optisch abzutasten, auf.

Die mindestens eine Sensorvorrichtung des Inkrementalgebers kann dabei einen relativ zu der Massverkörperung bewegbaren Messkopf mit einer optischen Abbildungseinrichtung zur Erzeugung eines Abbilds der Inkrementalspur sowie einer Vielzahl von Photosensoren zum Erfassen des Abbildes aufweisen. Um die Interpolierbarkeit des Sensorsignals weiter zu verbessern, kann die Sensorvorrichtung vor allem derart ausgebildet sein, sodass die Photosensoren beim Erfassen des Abbilds ein sinusförmiges Ausgangssignal erzeugen. Hierzu kann die Abbildungseinrichtung der Sensorvorrichtung beispielsweise eine elliptische Abtastblende aufweisen. Alternativ ist es auch denkbar, dass die Photosensoren der Sensorvorrichtung zum Erzeugen eines sinusförmigen Ausgangssignals eine im Wesentlichen elliptische Sensorfläche beschreiben. Durch das Zusammenspiel der erfindungsgemässen Massverkörperung mit der oben genannten Sensorvorrichtung wird ein besonders vorteilhaftes Verhältnis zwischen Kontrast und Interpolierbarkeit der Sensorsignale erreicht, welches später mit Bezug auf die Figuren näher erläutert werden wird.

Wie oben bereits erwähnt, betrifft die folgende Erfindung ebenfalls ein Verfahren zum Aufbringen der erfindungsgemässen Massverkörperung auf eine Metalloberfläche.

Das erfindungsgemässe Verfahren weist einen Schritt zum Bereitstellen eines gepulsten Lasers zur Erzeugung eines Laserstrahls auf. Mit Hilfe des Lasers wird die Metalloberfläche derart mit Laserstrahlung beaufschlagt, sodass ein Streubereich aus mindestens zwei linienartigen Vertiefungen entsteht, welcher eine Breite aufweist, die kleiner als die Hälfte des Pitch der Massverkörperung ist.

Nach einer ersten Weiterbildung des Verfahrens erfolgt die Beaufschlagung der Metalloberfläche mit der Laserstrahlung insbesondere für die Zeitdauer eines ersten Laserpulses. Dabei ist der Laserstrahl derart ausgebildet, sodass eine erste im Wesentlichen runde Vertiefung auf der Metalloberfläche entsteht. Daraufhin wird der Laserstrahl senkrecht zur Längsrichtung der mindestens einen Inkrementalspur verfahren. Das Verfahren des Laserstrahls erfolgt insbesondere kontinuierlich während dem Beaufschlagen der Metalloberfläche. Durch einen weiteren Laserpuls wird eine weitere im Wesentlichen runde Vertiefung, an einer senkrecht zur Inkrementalspur versetzten, weiteren Verfahrposition erzeugt. Dieser auch als Laserscannen bekannte Vorgang kann beispielsweise mit einem verfahrbaren Spiegel durchgeführt werden, wobei der Spiegel solange senkrecht Verfahren wird, bis eine im Wesentlichen linienartige Vertiefungen erzeugt wurde. Auf analoge Weise wird sodann eine zweite, linienartige Vertiefung erzeugt, sodass ein Streubereich entsteht, welcher eine Breite aufweist, die kleiner oder gleich der Hälfte des Pitch ist. Für eine linienartige Vertiefung mit einer Länge von etwa 1 mm können dabei beispielsweise ca. 600 Pulse vorgesehen sein.

Der Laserstrahl wird, durch ein Verfahren des Spiegels und/ oder der Metalloberfläche, zwischen den einzelnen Pulsen jeweils soweit senkrecht zur Längsrichtung der mindestens einen Inkrementalspur verfahren, sodass sich die im Wesentlichen runden Vertiefungen derart überlappen, dass die mindestens zwei linienartigen Vertiefungen entstehen, welche im Wesentlichen senkrecht gegenüber der Längsrichtung der Inkrementalspur ausgerichtet sind.

Der Laserstrahl kann beispielsweise ein im Wesentlichen rundes Strahlenbündel mit einem Durchmesser aufweisen, der derart gewählt wird, sodass die im Wesentlichen runden Vertiefungen einen Durchmesser von 3,5 $\mu$m bis 12 $\mu$m, vorzugsweise 6 $\mu$m bis 9 $\mu$m und insbesondere etwa 7 $\mu$m aufweisen. Der Laser kann dabei mit einer Leistung betrieben werden, die dazu ausreicht, die im Wesentlichen runden Vertiefungen mit einer Tiefe von etwa 0,5 $\mu$m aus-

zubilden. Im Einzelnen können die Mittelpunkte der im Wesentlichen runden Vertiefungen dabei in einem Abstand von 0,1 $\mu$m bis 10 $\mu$m angeordnet sein, um zu gewährleisten, dass sich jeweils zwei der im Wesentlichen runden Vertiefungen überlappen, falls diese senkrecht zur Längsrichtung der Inkrementalspur unmittelbar hintereinander bzw. benachbart angeordnet sind.

Es wurde festgestellt, dass die linienartigen Vertiefungen besonders vorteilhafte Reflexionseigenschaften aufweisen, wenn der Laserstrahl derart verfahren wird, sodass eine Überlappung der im Wesentlichen runden Vertiefungen von mindestens 75% entsteht.

Alternativ zum Verfahren des Laserstrahls, senkrecht zur Längsrichtung der Inkrementalspur, kann es gemäss einer weiteren Ausführungsform vorgesehen sein, dass der Laserstrahl vor dem Beaufschlagen der Metalloberfläche über ein Maskierungselement geführt wird, welches mindestens zwei linienartige Öffnungen aufweist. Dementsprechend wird ein Abbild der linienartigen Öffnungen derart durch den Laserstrahl auf die Metalloberfläche abgebildet, sodass mindestens ein Streubereich aus mindestens zwei linienartigen Vertiefungen entsteht. Mit anderen Worten können die linienartigen Vertiefungen eines Streubereichs gemäss dieser Umsetzung insbesondere gleichzeitig erzeugt werden. Der Laserstrahl wird dabei solange durch das Maskierungselement auf die Metalloberfläche gerichtet, bis die mindestens zwei linienartigen Vertiefungen des Streubereichs eine Tiefe von etwa 0,5 $\mu$m und eine Breite von 6 $\mu$m bis 9 $\mu$m, insbesondere etwa 7 $\mu$m aufweisen.

Im Folgenden wird die erfindungsgemässe Massverkörperung sowie das entsprechende Verfahren anhand der in den Figuren dargestellten Ausführungsbeispiele näher erläutert.

Dabei zeigen:

Fig. 1a    Schematische Darstellung einer aus dem Stand der Technik bekannten Massverkörperung mit Sensorvorrichtung zur Durchlichtmessung.

Fig. 1b    Schematische Draufsicht auf die Sensorfläche der in Fig. 1a dargestellten Sensorvorrichtung;

Fig. 1c    Schematische Darstellung der Beleuchtungsintensität auf der Sensorfläche gemäss Fig. 1b sowie des daraus resultierenden Sensorsignals als Funktion der Position der Sensorvorrichtung bei einer Bewegung der Sensorvorrichtung in Längsrichtung der Massverkörperung;

Fig. 1d    Schematische Draufsicht auf eine aus dem Stand der Technik bekannte Massverkörperung;

Fig. 1e    Schematische Darstellung der Beleuchtungsintensität auf der Sensorfläche einer Sensorvorrichtung gemäss Fig. 1a bei Verwendung einer Massverkörperung nach Fig. 1d;

Fig. 2a    Schematische Draufsicht auf eine erste Ausführungsform der erfindungsgemässen Massverkörperung;

Fig. 2b    Schematische Schnittansicht durch die in Fig. 2a dargestellte erste Ausführungsform der Massverkörperung;

Fig. 3    Diagramm betreffend die Abhängigkeit des Kontrasts von der Streubereichbreite;

Fig. 4    Schematische Draufsicht auf eine zweite Ausführungsform der erfindungsgemässen Massverkörperung;

Fig. 5a    Schematische Darstellung einer diffusen Reflexion von Licht an einem Streubereich mit einer linienartigen Vertiefung;

Fig. 5b    Schematische Darstellung einer diffusen Reflexion von Licht an einem Streubereich mit drei linienartigen Vertiefungen (wie bei der Massverkörperung gemäss Fig. 4 realisiert);

Fig. 5c    Schematische Darstellung der Beleuchtungsintensität auf der Sensorfläche einer Sensorvorrichtung gemäss Fig. 1a bei Verwendung einer Massverkörperung nach Fig. 4;

Fig. 6    Schematische Draufsicht auf eine dritte Ausführungsform der erfindungsgemässen Massverkörperung;

Fig. 7    Schematische Draufsicht auf eine vierte Ausführungsform der erfindungsgemässen Massverkörperung;

Fig. 8    Schematische Draufsicht auf eine fünfte Ausführungsform der erfindungsgemässen Massverkörperung; und

Fig. 9a    Perspektivische Schemadarstellung einer ersten Ausführungsform des erfindungsgemässen Verfahrens zum Aufbringen der Massverkörperung auf eine Metalloberfläche.

Fig. 9b    Perspektivische Schemadarstellung einer zweiten Ausführungsform des erfindungsgemässen Verfahrens zum Aufbringen der Massverkörperung auf eine Metalloberfläche.

In der nachfolgenden detaillierten Figurenbeschreibung werden gleiche oder gleich wirkende Bauteile aus Gründen der Übersichtlichkeit mit gleichen Bezugszeichen versehen.

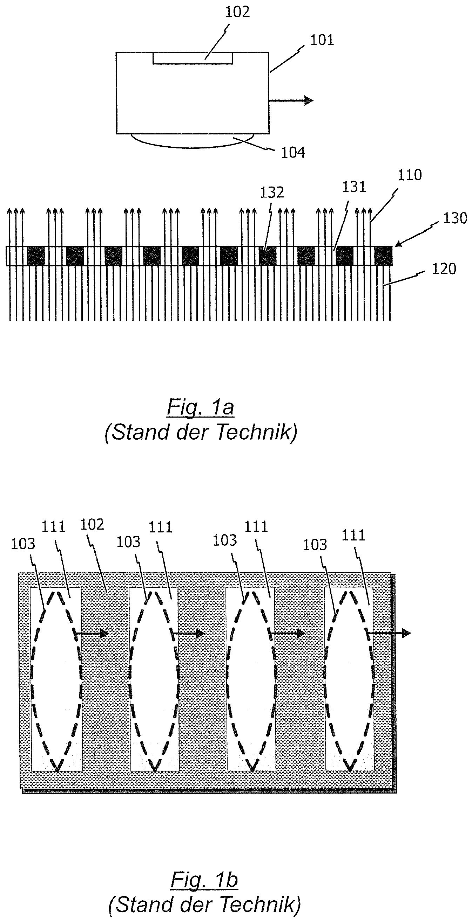

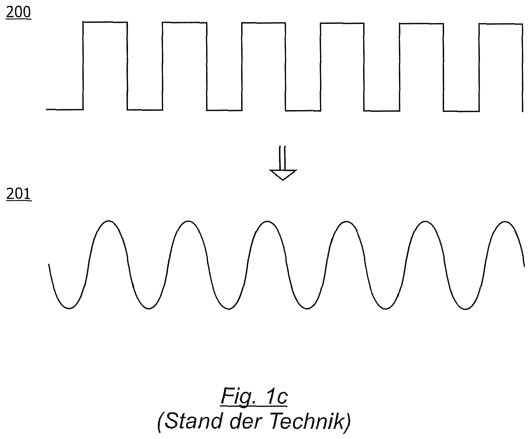

Die aus dem Stand der Technik bekannte Problemstellung sei zunächst mit Bezug auf die Figuren 1a bis 1e dargestellt. Im Einzelnen ist der Fig. 1a eine Massverkörperung 130 für die Durchlichtmessung zu entnehmen. Dabei weist die Massverkörperung 130 eine Vielzahl vorzugsweise länglicher, transparenter Bereiche 131 auf, welche parallel nebeneinander angeordnet und durch nicht transparente Bereiche 132 voneinander getrennt sind. Die Durchlicht-Massverkörperung 130 wird, wie dargestellt, derart von unten bestrahlt, sodass erste Lichtstrahlen 110 durch die transparenten Bereiche 131 der Massverkörperung 130 treten, während zweite Lichtstrahlen 120 von den nicht transparenten Bereichen 132 der Massverkörperung 130 abgeschirmt werden. Somit ergibt sich die in Fig. 1c dargestellte, rechteckige Intensitätsverteilung 200 des Lichts am Sensor 102 der Sensorvorrichtung 101.

Im Einzelnen werden die Lichtstrahlen 110 durch die Abbildungsvorrichtung 104 der Sensorvorrichtung 101 auf die Sensorfläche 102 abgebildet, wodurch auf der Sensorfläche 102 das in Fig. 1b dargestellte Beleuchtungsmuster entsteht. Fig. 1b zeigt beispielhaft das Beleuchtungsmuster, welches durch rechteckige, transparente Bereiche 131 auf der Sensorfläche 102 entsteht. Insbesondere ergeben sich hierbei rechteckige Beleuchtungsbereiche 111, an welchen die erste Strahlung 110 auf die Sensorfläche 102 trifft. Die Sensorfläche 102 weist eine Vielzahl im Wesentlichen elliptischer Fotosensoren 103 auf, welche durch Verfahren des Sensors entlang der Massverkörperung 130 an den Beleuchtungsbereichen 111 vorbei geführt werden. Beim Verfahren der Sensorvorrichtung 101 gegenüber der Massverkörperung 130 in Richtung des in Fig. 1a dargestellten Pfeils werden die elliptischen Fotosensoren 103 (beispielsweise in Richtung der in Fig. 1b dargestellten Pfeile) relativ zu den Beleuchtungsbereichen 111 verschoben.

Durch die oben genannte Beleuchtung der elliptischen Fotosensoren 103 mit den im Wesentlichen rechteckigen Beleuchtungsbereichen 111 entsteht am Ausgang der Sensorvorrichtung 101 das in Fig. 1c dargestellte, sinusförmige Sensorsignal 201. Dieser Vorgang entspricht einer Faltung des rechteckförmigen Lichtsignals 200 mit den elliptischen Fotosensoren 103, wodurch das sinusförmige Sensorsignal 201 entsteht. Dabei zeigt Fig. 1c das Sensorsignal 201 als Funktion der Position der Sensorvorrichtung 101 bei einer Bewegung der Sensorvorrichtung 101 in Längsrichtung der Massverkörperung 130, d.h. in Richtung der in Fig. 1b dargestellten Pfeile, wobei in horizontaler Richtung die Position der Sensorvorrichtung 101 und in vertikaler Richtung das Sensorsignal 201 aufgetragen ist.

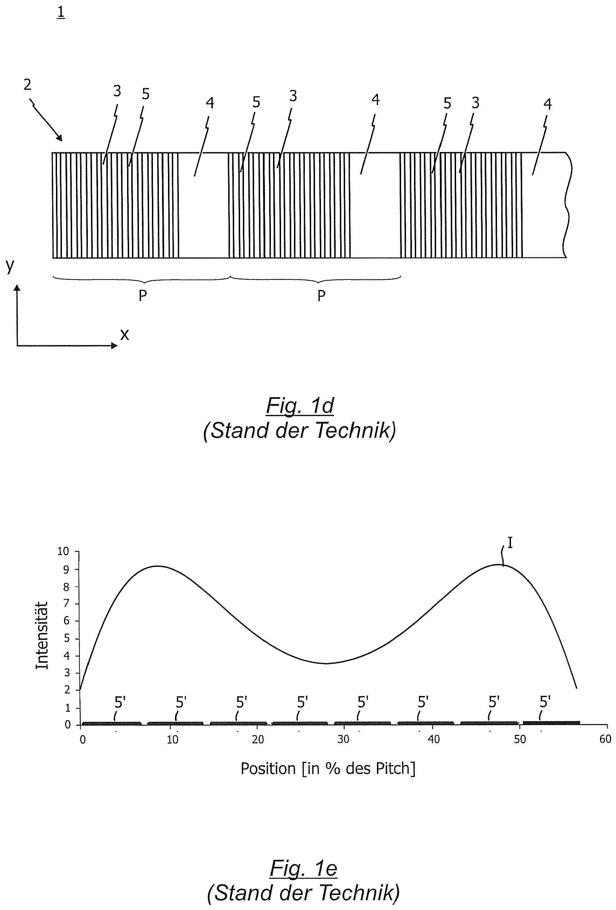

Der Darstellung gemäss Fig. 1d kann eine aus dem Stand der Technik bekannte Auflicht-Massverkörperung 1 in einer schematischen Draufsicht entnommen werden. Wie oben bereits angedeutet, weisen die herkömmlichen Massverkörperungen 1 mindestens eine Inkrementalspur 2 mit in Längsrichtung X alternierend angeordneten Streubereichen 3 und Spiegelbereichen 4 auf. Dabei bestehen die Streubereiche 3 aus einer Vielzahl, direkt nebeneinander angeordneter linienartiger Vertiefungen 5, welche dazu ausgebildet sind, einfallendes Licht diffus zu reflektieren. Mit anderen Worten, die Oberfläche der Streubereiche 3 wird durch die linienartigen Vertiefungen 5 aufgeraut, wodurch diese keine spiegelnden, sondern diffuse Reflexionseigenschaften aufweist. Bei den Spiegelbereichen 4 handelt es sich hingegen um glatte (Metall-) Oberflächen, welche dazu ausgebildet sind, einfallendes Licht spiegelnd zu reflektieren. Dementsprechend werden unter einem Winkel α einfallende Lichtstrahlen durch die Spiegelbereiche 4 unter demselben Winkel α reflektiert (Einfalls-Winkel = AusfallsWinkel). Die auf die Streubereiche 3 treffenden Lichtstrahlen, hingegen, werden durch die linienartigen Vertiefungen 5 diffus gestreut.

Fig. 1e zeigt die Intensitätsverteilung, welche bei der Dunkelfeldmessung der Reflexionen an einem Streubereich 3 auf der Sensorfläche 102 einer Sensorvorrichtung 101 gemäss Fig. Ia entlang der Längsrichtung X messbar wäre. Im Falle der Fig. 1e ist (beispielhaft) angenommen, dass die Anzahl der linienartigen Vertiefungen 5 pro Streubereich 3 jeweils acht beträgt. In Fig. 1e stellen die mit dem Bezugszeichen 5' gekennzeichneten horizontalen Linien Bereiche auf der Sensorfläche 102 dar, welche jeweils einer optischen Abbildung der Vertiefungen 5 entspricht, die mittels der Abbildungsvorrichtung 104 der Sensorvorrichtung 101 auf der Sensorfläche 102 erzeugbar wäre. Dabei markiert jede Linie 5' die Erstreckung einer optischen Abbildung einer der Vertiefungen 5 auf der Sensorfläche 102 in der Längsrichtung X. In Fig. 1e gibt die durchzogene, mit dem Bezugszeichen I versehene Linie die bei einer Dunkelfeldmessung erzeugte räumliche Verteilung der Intensität des auf die Sensorfläche 102 auftreffenden Lichts an. Dabei ist angenommen, dass die Inkrementalspur 2 mit zwei verschiedenen (in den Figuren nicht dargestellten) Lichtquellen beleuchtet wird, wobei die Lichtquellen derart angeordnet sind, dass die Inkrementalspur 2 auf einer Seite des Massverkörperung mittels der zwei Lichtquellen aus zwei verschiedenen Richtungen symmetrisch zu einer Ebene beleuchtet wird, welche sich senkrecht zur Längsrichtung X der Massverkörperung und parallel zur Längsrichtung Y der linienartigen Vertiefungen erstreckt. Dabei ist ferner angenommen, dass das Licht beider Lichtquellen jeweils unter einem Winkel α auf die Massverkörperung trifft, welcher so gewählt ist, dass das an den Spiegelbereichen 4 reflektierte Licht nicht auf die Sensorfläche 102 trifft und somit nicht von der Sensorvorrichtung 101 detektiert werden kann. Wie aus Fig. 1d ersichtlich, hat im vorliegenden Beispiel die Intensitätsverteilung I als Funktion des Ortes entlang der Längsrichtung X zwei deutlich ausgeprägte Maxima. Es lässt sich direkt erkennen, dass die Intensitätsverteilung, im Gegensatz zur Durchlicht-Mikroskopie (entsprechend Fig. 1a-1c), keineswegs einem Rechteck-Signal entspricht. Sollte nun eine herkömmliche Sensorvorrichtung 101 dazu benutzt, werden die Massverkörperung 2 abzutasten, so könnte durch eine Überlagerung des Signals aus Fig. 1e mit den elliptischen Fotosensoren 103 kein brauchbares, sinusförmiges Sensorsignal erzeugt werden (im Gegensatz zur Situation gemäss Fig. 1a-1c). Vielmehr ist die Interpolierbarkeit des durch herkömmliche Massverkörperungen erzielbaren Sensorsignals nur sehr schwach.

Dementsprechend wird durch die vorliegende Erfindung eine Massverkörperung angegeben, mit welcher eine besonders kontrastreiche, insbesondere rechteckigförmige Ausleuchtung der Sensorfläche erzielt werden kann. Damit einhergehend soll die Interpolierbarkeit des Sensorsignals durch die erfindungsgemässe Massverkörperung verbessert werden.

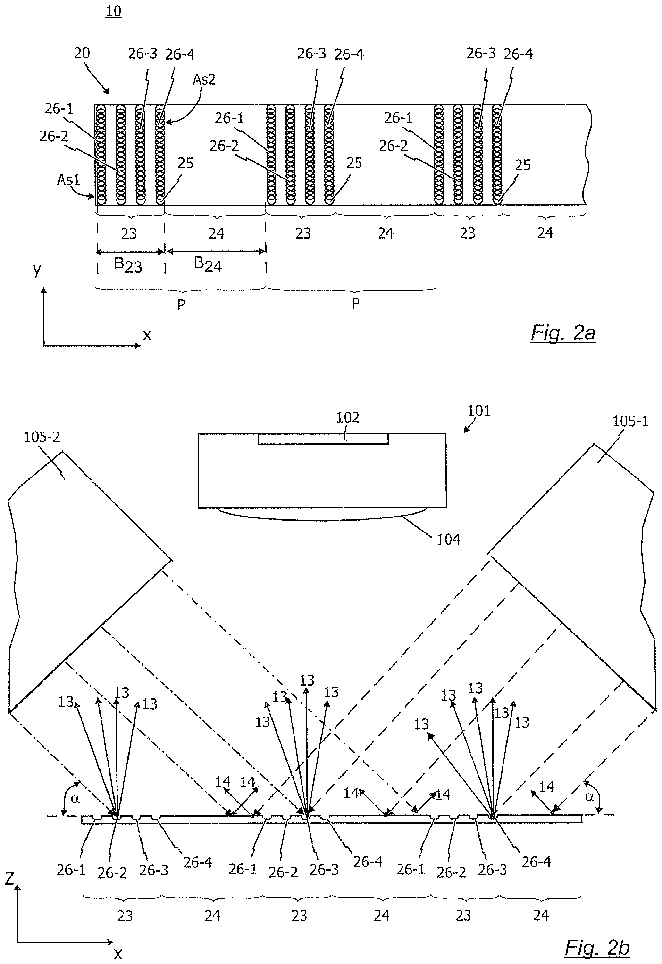

Eine erste Ausführungsform der erfindungsgemässen Massverkörperung, welche dieses Problem löst, ist beispielsweise den Figuren 2a und 2b zu entnehmen. Auch die in den Figuren 2a und 2b dargestellte, erfindungsgemässe Massverkörperung 10 weist mindestens eine Inkrementalspur 20 auf, welche in Längsrichtung X alternierend angeordnete Streubereiche 23 und Spiegelbereiche 24 umfasst. Dabei sind die Spiegelbereiche 24 wiederum mit einer im Wesentlichen glatten Oberfläche ausgebildet, welche einfallendes Licht spiegelnd reflektiert. Die Streubereiche 23 sind dagegen mit mindestens zwei, im speziellen vier, linienartigen Vertiefungen 26-1, 26-2, 26-3, 26-4 versehen, welche in der Längsrichtung X der Inkrementalspur 20 in einer Reihe hintereinander angeordnet sind, wobei die beiden linienartigen Vertiefungen 26-1 und 26-4 an gegenüber liegenden Aussenseiten As1 bzw. As2 des jeweiligen Streubereichs 23 angeordnet sind. Die Breite eines der Streubereiche 23 zusammen mit der Breite eines der Spiegelbereiche 24 wird durch den Pitch P bestimmt. Wie oben bereits ausgeführt, ist der Pitch P dabei eine Konstante, welche durch die zu verwendende Sensorvorrichtung bestimmt wird.

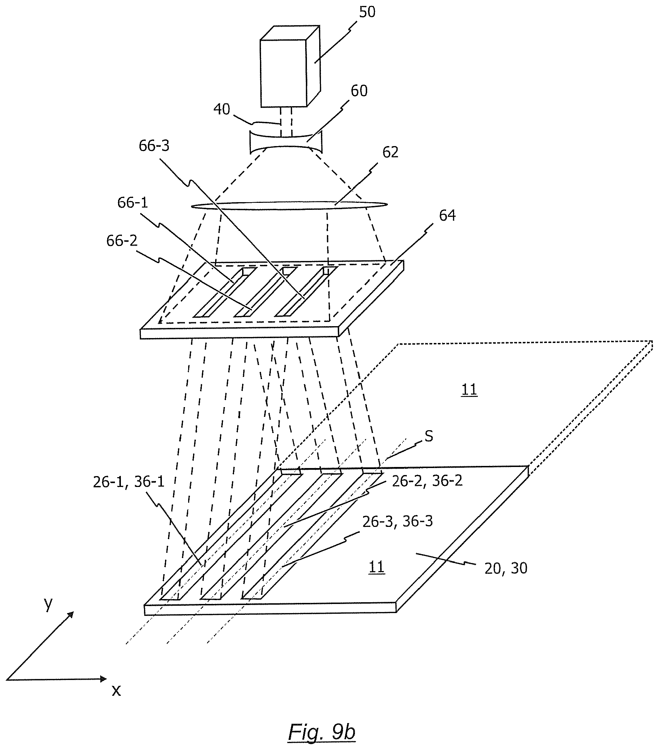

Im Einzelnen sind die in Fig. 2a dargestellten linienartigen Vertiefungen 26-1, 26-2, 26-3, 26-4 durch im Wesentlichen runde Vertiefungen 25 aufgebaut, welche derart überlappend angeordnet sind, sodass die mindestens zwei parallelen, linienartigen Vertiefungen 26-1, 26-2, 26-3, 26-4 entstehen. Die linienartigen Vertiefungen 26-1, 26-2, 26-3, 26-4 sind durch die in Querrichtung Y überlappenden, runden Vertiefungen 25 insbesondere senkrecht gegenüber der Längsrichtung X der Inkrementalspur 20 ausgerichtet. Wie es weiter unten näher dargestellt werden wird, ist die erfindungsgemässe Massverkörperung jedoch nicht auf die spezielle Ausbildung der linienartigen Vertiefungen 26-1, 26-2, 26-3, 26-4 aus einer Vielzahl runder Vertiefungen beschränkt. Vielmehr können diese auch in einem einzigen Arbeitsschritt als kontinuierliche Gräben erzeugt werden (Fig. 9b).

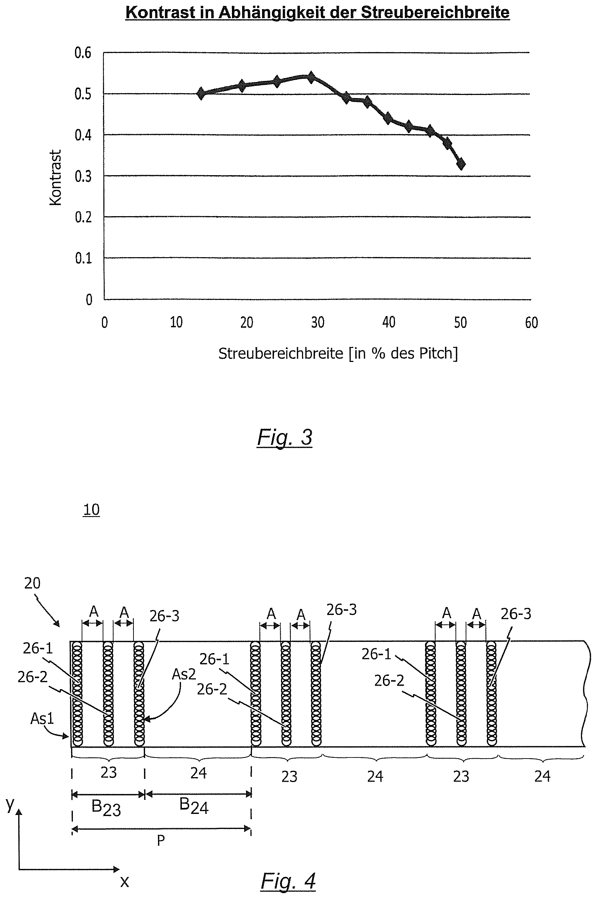

Wie Fig. 2a ferner zeigt, unterscheidet sich die erfindungsgemässe Massverkörperung 10 insbesondere auch dadurch vom Stand der Technik, dass die Breite der Streubereiche 23 weniger als die Hälfte des Pitch P beträgt. Durch die derartig verkürzten Streubereiche 23, wird eine Intensitätsverteilung des Streulichts (13, Fig. 2b) erreicht, welche dem Rechtecksignal 200 aus Fig. 1c sehr nahe kommt. Ein Beispiel hierfür wird später mit Bezug auf die bevorzugte Ausführungsform aus Fig. 4 beschrieben.

Es sei im Übrigen auch erwähnt, dass die Erfindung generell nicht auf eine bestimmte Anzahl von Vertiefungen pro Streubereich 23 beschränkt ist, solange mindestens zwei Vertiefungen vorhanden sind. Nach oben ist der Zahl der linienartigen Vertiefungen ebenfalls generell keine Grenze gesetzt, solange die Breite der Streubereiche 23 nicht mehr als 50% des Pitch ausmacht.

Ein Querschnitt durch die in Fig. 2a dargestellte Ausführungsform, in Längsrichtung X, ist in der Fig. 2b zu erkennen. Hieraus lässt sich die Reflexionswirkung der einzelnen Bereiche 23 bzw. 24 schematisch erkennen. Wie Fig. 2b andeutet, sind im vorliegenden Beispiel zur Beleuchtung der einzelnen Bereiche 23 bzw. 24 der Inkrementalspur 20 zwei Lichtquellen 105-1 und 105-2 vorgesehen, welche jeweils Licht erzeugen, das unter einem Winkel $\alpha$ auf die Bereiche 23 bzw. 24 der Inkrementalspur 20 fällt, sodass die Bereiche 23 bzw. 24 der Inkrementalspur 20 aus zwei verschiedenen Richtungen symmetrisch zu einer Ebene beleuchtet wird, welche sich senkrecht zur Längsrichtung X der Massverkörperung 20 und parallel zur Längsrichtung Y der linienartigen Vertiefungen 26-1, 26-2, 26-3, 26-4 erstreckt (in Fig. 2b stellen die geraden, gestrichelten Linien jeweils Lichtstrahlen dar, welche dem von der Lichtquelle 105-1 auf die Inkrementalspur 20 einfallenden Licht entsprechen, und die geraden, strichpunktierten Linien jeweils Lichtstrahlen dar, welche dem von der Lichtquelle 105-2 auf die Inkrementalspur 20 einfallenden Licht entsprechen). Dabei ist ferner angenommen, dass der Winkel $\alpha$ so gewählt ist, dass das an den Spiegelbereichen 24 reflektierte Licht nicht auf die Sensorfläche 102 trifft und somit nicht von der Sensorvorrichtung 101 detektiert werden kann. Im Einzelnen wird einfallendes Licht von den linienartigen Vertiefungen 26-1, 26-2, 26-3 bzw. 26-4 der Streubereiche 23 diffus reflektiert, sodass eine im Wesentlichen ungerichtete Strahlung 13 auf die Sensorvorrichtung 101 zurück geworfen wird. Mit dem Begriff "im Wesentlichen ungerichtete Strahlung" 13 soll ausgedrückt werden, dass die Strahlung 13 zwar diffus ist, jedoch dennoch eine Vorzugsrichtung aufweist. Dies liegt darin begründet, dass durch die linienartige Ausbildung der Vertiefungen 26-1, 26-2, 26-3, 26-4 eine Vorzugsrichtung für die diffuse Reflexion erreicht wird, welche senkrecht zu den linienartigen Vertiefungen 26-1, 26-2, 26-3, 26-4, d. h. in Längsrichtung X der Inkrementalspur 20, verläuft. Eine Streuung des Einfallendes Lichtstrahls in Querrichtung Y der Inkrementalspur ist hingegen vernachlässigbar gering.

Im Gegensatz dazu werden Lichtstrahlen, welche auf die Spiegelbereiche 24 treffen, unter ihrem Einfallswinkel (d.h. dem Winkel α) von der glatten Oberfläche der Spiegelbereiche 24 reflektiert. Somit ergibt sich eine gerichtete Strahlung 14, welche vorzugsweise keinen Einfluss auf das Sensorsignal hat. Zu diesem Zweck befindet sich das Sensorobjektiv insbesondere senkrecht über der beleuchteten Stelle der Inkrementalspur 20, wodurch die schräg reflektierte, gerichtete Strahlung 14 den Sensor nicht erreichen kann. Lediglich die diffus reflektierte, im Wesentlichen ungerichtete Strahlung 13 weist auch senkrechte Strahlungsanteile auf, welche die Sensoroptik erreichen können. Dieses Messprinzip wird auch in der Dunkelfeldmikroskopie angewendet. Somit werden mit dem Sensorsignal lediglich die linienartigen Vertiefungen 26-1, 26-2, 26-3, 26-4 der Streubereiche 23 als helle Stellen erfasst. Die Spiegelbereiche 24, hingegen, sind vorzugsweise komplett dunkel, d. h. der Dunkelfeldsensor kann hier keine Lichtstrahlung erfassen. Ein derartiger Sensor ist beispielsweise der Anmeldung EP 2 381 222 A1 zu entnehmen.

Der vorliegenden Erfindung liegt also die Erkenntnis zu Grunde, wonach der Kontrast und die Interpolierbarkeit des Sensorsignals signifikant erhöht werden kann, wenn die Breite der Streubereiche 23 verkleinert wird. Dabei ist es besonders von Vorteil, wenn die Streubereiche 23, in Längsrichtung X der Inkrementalspur 20, eine Breite aufweisen, die kleiner als oder gleich einer Breite der Spiegelbereiche 24, d.h. kleiner oder gleich der Hälfte des Pitch P ist. Fig. 2a zeigt ferner, dass die Breite der Streubereiche 23 durch die zwei an den Aussenseiten As1 bzw. As2 liegenden linienartigen Vertiefungen (26-1 sowie 26-4) begrenzt wird.

Es sei jedoch angemerkt, dass die Breite der Streubereiche 23 in jedem Fall grösser als 1/10 des Pitch P sein sollte. Darüber hinaus kann durch die zu kleine Ausbildung der Streubereiche 23 eine unzureichende Ausleuchtung der Fotosensoren der Sensorvorrichtung entstehen. Dies liegt insbesondere darin begründet, dass ein zu kleiner Streubereich 23 wiederum einen negativen Einfluss auf die Interpolierbarkeit der Sensorsignale hat. Im speziellen wurde festgestellt, dass die erfindungsgemässen Streubereiche 23 vorzugsweise eine Breite aufweisen sollten, welche 30% bis 45%, vorzugsweise 35% bis 40%, und insbesondere etwa 38% der Breite des Pitch P entspricht. Hierdurch wird ein optimaler Kontrast des Sensorsignals gewährleistet.

In dem oben genannten Zusammenhang sei auch auf die Darstellung gemäss Fig. 3 hingewiesen. Die Fig. 3 zeigt den Kontrast des Sensorsignals in Abhängigkeit von der Breite der Streubereiche 23. Die Darstellung der Fig. 3 zeigt die Breite der Streubereiche im Verhältnis zum Pitch P. Der Pitch P ist die Periodizität (Periodenlänge) der Massverkörperung (Inkrementalspur 20) und entspricht einer Addition der Breite der Streubereiche 23 und der Breite der Spiegelbereiche 24, d. h. es gilt:

$$P = B_{23} + B_{24}$$

Dabei wird mit den Variablen $B_{23}$ und $B_{24}$ die Breite der jeweiligen Streubereiche 23 bzw. Spiegelbereiche 24 in Längsrichtung X der Inkrementalspur 20 ausgedrückt. Bei der Bestimmung des Kontrasts wird davon ausgegangen, dass die Sensorvorrichtung 101 bei einer Bewegung der Sensorvorrichtung 101 in der Längsrichtung X ein Sensorsignal S erzeugt, welches in Abhängigkeit von der Position der Sensorvorrichtung 101 im Wesentlichen periodisch zwischen einem maximalen Signal-Wert Smax und einem minimalen Signal-Wert Smin variiert. Als "Kontrast" K des Sensorsignals S wird in diesem Zusammenhang das Verhältnis aus der "Amplitude" (Smax-Smin)/2 des Sensorsignals S und einem "Mittelwert" (d.h. (Smax+Smin)/2) des Sensorsignals S betrachtet, d.h. der "Kontrast" K des Sensorsignals S wird berechnet als

$$K= (Smax - Smin)/(Smax + Smin).$$

Der Kontrast K nimmt in der Regel einen Wert zwischen 0 und 1 an. Dabei kann die Sensorvorrichtung 101 gegebenenfalls so eingerichtet sein, dass die Sensorvorrichtung 101 für das Sensorsignal S den Wert 0 ausgibt, falls die Beleuchtung der Massverkörperung ausgeschaltet ist.

Aus Fig. 3 ist zu erkennen, dass sich ein maximaler Kontrast ergibt, wenn die Breite der Streubereiche 23 in etwa 30% der Breite des Pitch P entspricht. Es wurde jedoch überraschender Weise festgestellt, dass bei einer zu grossen Verringerung der Breite der Streubereiche 23 die Interpolierbarkeit des Sensorsignale negativ beeinflusst wird. Es zeigt sich nämlich, dass bei einer zu grossen Verringerung der Breite der Streubereiche 23 das von der Sensorvorrichtung 101 erzeugte Sensorsignal S bei einer Bewegung der Sensorvorrichtung 101 in der Längsrichtung X eine Variation als Funktion der Position der Sensorvorrichtung 101 aufweist, welche von einer (beispielsweise in Fig. 1c dargestellten) sinusförmigen Variation stark abweichen kann. Wenn die Variation des Sensorsignals S als Funktion der Position der Sensorvorrichtung 101 stark von einer sinusförmigen Variation abweicht, ist eine Interpolation zwischen verschiedenen Werten des Sensorsignals, welche verschiedenen Positionen der Sensorvorrichtung 101 zugeordnet sind, erheblich erschwert. Dies erschwert eine präzise Bestimmung der Position der Sensorvorrichtung 101 durch Interpolieren zwischen verschiedenen Werten des Sensorsignals.

Deshalb wurde versucht ein bestmögliches Verhältnis zwischen Interpolierbarkeit und Kontrast zu erreichen. Hierbei hat sich heraus gestellt, dass insbesondere die oben bereits erwähnten Bereiche für die Breite der Streubereiche 23 von Vorteil sind. Im Einzelnen wurde festgestellt, dass die Breite der Streubereiche 23 vorzugsweise in einem Bereich zwischen 35% und 40% des Pitch liegen sollten.

Zurückkommend auf die linienartigen Vertiefungen 26-1, 26-2, 26-3, 26-4, sei erwähnt, dass diese in einem Abstand angeordnet sein sollten, welcher grösser als Null ist. Das heisst, benachbarte parallele, linienartige Vertiefungen 26-1, 26-2, 26-3, 26-4 besitzen keine Berührungspunkte. Gleichzeitig ist es vorzugsweise vorgesehen, dass der Abstand der benachbarten parallelen linienartigen Vertiefungen 26-1, 26-2, 26-3, 26-4 kleiner als die Hälfte des Pitch P abzüglich dem zweifachen einer Breite der linienartigen Vertiefungen 26-1, 26-2, 26-3, 26-4, in Längsrichtung X der Inkrementalspur 20, ist. Diese letzte Bedingung ergibt sich insbesondere daraus, dass die Streubereiche 23 mindestens zwei parallele linienartigen Vertiefungen 26-1, 26-2, 26-3, 26-4 aufweisen und die Breite der Streubereiche 23 die Hälfte des Pitches P nicht überschreiten sollte.

Um die bestmögliche Kombination aus Abstand der linienartigen Vertiefungen 26-1, 26-2, 26-3, 26-4 voneinander sowie der Anzahl der linienartigen Vertiefungen 26-1, 26-2, 26-3, 26-4 pro Streubereich 23 zu finden, wurden die in der nachfolgenden Tabelle 1 gezeigten Versuche durchgeführt, welche sich jeweils auf einen Pitch P von 102,5 $\mu$m beziehen:

**Tabelle 1**

| Nr. | Zahl d. Vertiefungen | Abstand Vertiefungen | Breite Streubereich | Kontrast | Interpolierbarkeit [bit] |
|-----|----------------------|----------------------|---------------------|----------|--------------------------|
| V1 | 4 | $4\,\mu$m | $39\,\mu$m | 0,39 | 9,84 |
| V2 | 4 | $8\,\mu$m | $39\,\mu$m | 0,37 | 9,85 |
| V3 | 4 | $12\,\mu$m | $39\,\mu$m | 0,33 | 8,92 |
| V4 | 4 | $17\,\mu$m | $39\,\mu$m | 0,28 | - |
| V5 | 3 | $7,5\,\mu$m | $39\,\mu$m | 0,34 | 11,25 |
| V6 | 2 | $23\,\mu$m | $39\,\mu$m | 0,24 | - |

Wie aus der oben stehenden Tabelle 1 zu entnehmen ist, ist vor allem die Versuchsanordnung gemäss V5 besonders vorteilhaft, da diese einen vergleichsweise hohen Kontrast des Sensorsignals aufweist, wobei die Interpolierbarkeit gleichzeitig ebenfalls gute Werte liefert. Eine schematische Ansicht dieser bevorzugten Ausführungsform ist in Fig. 4 als Draufsicht gezeigt.

Kurz zusammengefasst betrug die Breite der Streubereiche $39\,\mu$m im Versuch V5 was in etwa 38% der Breite des Pitch entspricht. Es wurden drei linienartige Vertiefungen pro Streubereich 23 vorgesehen, welche in einen Abstand von je 7,5 $\mu$m zueinander angeordnet wurden. Die Länge der drei linienartigen Vertiefungen betrug dabei in etwa 1 mm, wobei die Vertiefungen je eine Tiefe von etwa 0,5 $\mu$m und eine Breite von etwa 8 $\mu$m aufwiesen. Die hierzu erforderlichen Laserparameter werden weiter unten mit Bezug auf das erfindungsgemässe Verfahren näher erläutert.

Die in Fig. 4 dargestellte, bevorzugte zweite Ausführungsform der Massverkörperung 10, welche die Versuchsanordnung V5 schematisch darstellt, weist ebenfalls eine Inkrementalspur 20 auf, welche in Streubereiche 23 und Spiegelbereiche 24 unterteilt ist. Die Streubereiche 23 gemäss der zweiten Ausführungsform weisen insbesondere drei linienartige Vertiefungen 26-1, 26-2 sowie 26-3 auf. Wie oben bereits mehrfach erwähnt, ist die vorliegende Erfindung jedoch nicht auf die in den Ausführungsformen dargestellte Anzahl von Vertiefungen beschränkt.

Um die Interpolierbarkeit der Sensorsignale optimal zu erhöhen, wurde festgestellt, dass die Abstände A der linienartigen Vertiefungen 26-1, 26-2, 26-3 voneinander zwischen 6 $\mu$m und 9 $\mu$m, insbesondere 7,5 $\mu$m betragen sollten. Mit anderen Worten weisen die Streubereiche 23 gemäss der zweiten Ausführungsform mindestens drei parallele, linienartige Vertiefungen 26-1, 26-2, 26-3 auf, welche senkrecht gegenüber der Längsrichtung X der Inkrementalspur 20 ausgerichtet und in einem Abstand A von 6 $\mu$m bis 9 $\mu$m, insbesondere 7,5 $\mu$m voneinander beabstandet sind.

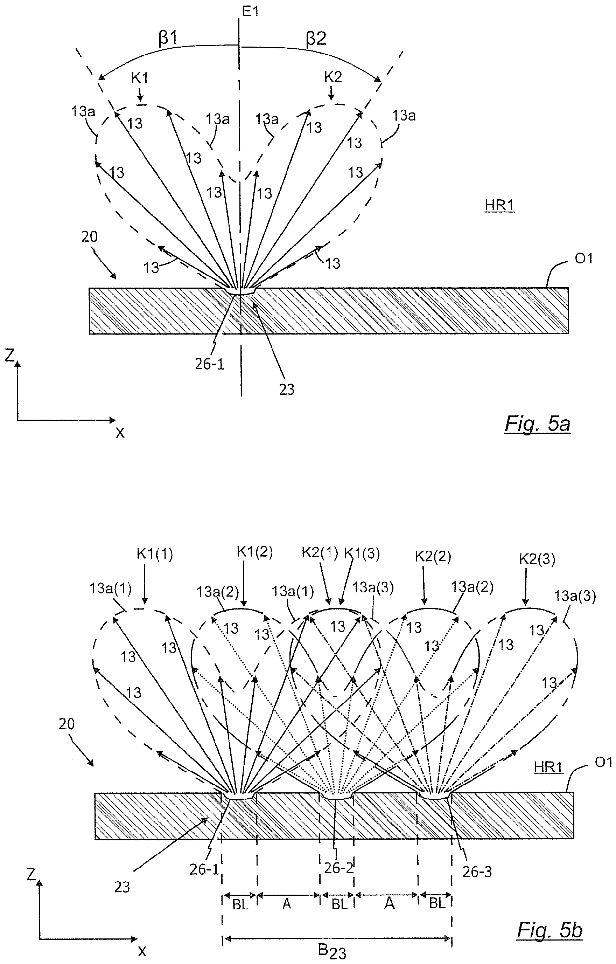

Die vorstehend beschriebenen Effekte, welche mit der Breite der Streubereiche 23, der Anzahl der linienartigen Vertiefungen pro Streubereich 23 und dem jeweiligen Abstand A zwischen zwei benachbarten linienartigen Vertiefungen eines Streubereichs 23 in Zusammenhang stehen, können anhand der Fig. 5a-5c plausibel gemacht werden.

Fig. 5a und 5b zeigen jeweils eine schematische Darstellung einer diffusen Reflexion von Licht an einem Streubereich 23 einer Inkrementalspur 20, wobei jeder Streubereich 23 eine oder mehrere linienartige Vertiefungen aufweist, welche an einer Oberfläche 01 eines Substrats angeordnet sind, sich parallel zur Oberfläche 01 erstrecken und jeweils wie eine der in Fig. 4 dargestellten linienartige Vertiefungen 26-1, 26-2, 26-3 ausgebildet sind. Dabei ist angenommen, dass im Falle der Inkrementalspur 20 gemäss Fig. 5a ein Streubereich 23 jeweils eine linienartige Vertiefung 26-1 aufweist, welche sich (analog zu Fig. 4) im Wesentlichen senkrecht zur Längsrichtung X der Inkrementalspur 20 erstreckt. Hingegen ist angenommen, dass im Falle der Inkrementalspur 20 gemäss Fig. 5b ein Streubereich 23 jeweils drei linienartige Vertiefungen 26-1 26-2, 26-3 aufweist, welche sich (analog zu Fig. 4) im Wesentlichen senkrecht zur Längsrichtung X der Inkrementalspur 20 erstrecken. Sowohl in Fig. 5a als auch in Fig. 5b ist die Inkrementalspur 20 jeweils in einem Längsschnitt parallel zur Längsrichtung X der Massverkörperung 20 und parallel zu einer Richtung Z, welche senkrecht zur Längsrichtung X der Inkrementalspur 20 und senkrecht zur Längsrichtung (Y) der jeweiligen linienartigen Vertiefungen 26-1 bzw. 26-2 bzw. 26-3 ausgerichtet ist, dargestellt.

Weiterhin ist angenommen, dass im Falle der Figuren 5a und 5b die Oberfläche 01 bzw. die Inkrementalspur 20 jeweils gleichmässig mit (in Fig. 5a und 5b nicht dargestelltem) Licht beleuchtet wird, welches analog zu Fig. 2b von zwei (in Fig. 5a und 5b nicht dargestellten) Lichtquellen (entsprechend den Lichtquellen 105-1 und 105-2 gemäss Fig. 2b) bereitgestellt wird und dementsprechend unter einem Winkel $\alpha < 90°$ auf die Oberfläche 01 bzw. die Inkrementalspur 20 fällt. Hierbei ist vorausgesetzt, dass die zwei (in Fig. 5a und 5b nicht dargestellten) Lichtquellen in einem an die Oberfläche 01 angrenzenden (sich in der Darstellung gemäss Fig. 5a und 5b "oberhalb" der Oberfläche 01 erstreckenden) Halbraum HR1 in einem Abstand zur Oberfläche 01 bzw. zur Inkrementalspur 20 angeordnet sind (analog zur Anordnung der Lichtquellen 105-1 und 105-2 gemäss Fig. 2b). Weiterhin ist angenommen, dass eine Sensorvorrichtung 101 gemäss Fig. 2b zum Abtasten der Inkrementalspur 20 zur Verfügung steht. Dabei ist analog zur Situation gemäss Fig. 2b vorausgesetzt, dass mittels der Sensorvorrichtung 101 ausschliesslich Licht detektiert werden kann, welches an den Vertiefungen 26-1 bzw. 26-2 bzw. 26-3 der Streubereiche 23 diffus reflektiert wird.

Fig. 5a zeigt eine schematische Darstellung einer diffusen Reflexion des Lichts, welches - wie vorstehend beschrieben - auf die Inkrementalspur 20 einfällt und an der einen linienartige Vertiefung 26-1 diffus reflektiert wird. In Fig. 5a ist das diffus reflektierte Licht 13 durch mit dem Bezugszeichen 13 versehene, von der einen linienartigen Vertiefung 26-1 ausgehende Pfeile repräsentiert, deren Richtung die jeweilige Ausbreitungsrichtung des diffus reflektierten Lichts und deren Länge die (relative) Intensität (Strahlungsstärke) des in die jeweilige Ausbreitungsrichtung diffus reflektierten Lichts charakterisieren. Wie Fig. 5a andeutet, liegen die Spitzen der das diffus reflektierte Licht 13 repräsentierenden Pfeile auf einer Kurve 13a. Diese Kurve 13a definiert demnach eine "Strahlungscharakteristik" des an der einen linienartige Vertiefung 26-1 diffus reflektierten Lichts 13 (d.h. die Kurve 13a stellt die relative Intensität des diffus reflektierten Lichts in Abhängigkeit von der jeweiligen Ausbreitungsrichtung des diffus reflektierten Lichts 13 dar). Wie die Kurve 13a bzw. die Pfeile 13 in Fig. 5a andeuten, breitet sich das diffus reflektierte Licht im Wesentlichen parallel zu einer Ebene, welche sich parallel zu den in Fig. 5a angegebenen Richtungen X und Z erstreckt, aus (bedingt durch die räumliche _Anordnung der linienartige Vertiefung 26-1). Wie die Kurve 13a bzw. die Pfeile 13 in Fig. 5a weiterhin andeuten, breitet sich das diffus reflektierte Licht 13, ausgehend von der einen linienartigen Vertiefung 26-1, im Wesentlichen senkrecht zur linienartige Vertiefung 26-1 und verteilt über alle Ausbreitungsrichtungen, welche auf den Halbraum HR1 gerichtet sind, aus.

Wie die Kurve 13a bzw. die Pfeile 13 in Fig. 5a weiterhin andeuten, ist die Strahlungscharakteristik des an der einen linienartigen Vertiefung 26-1 diffus reflektierten Lichts 13 im Wesentlichen symmetrisch zu einer Ebene E1, welche sich parallel zur Längsrichtung (Y) der linienartigen Vertiefung 26-1 und senkrecht zur Längsrichtung X der Inkrementalspur 20 erstreckt.

Wie Fig. 5a weiter andeutet, kann davon ausgegangen werden, dass die relative Intensität des diffus reflektierten Lichts 13 als Funktion der Ausbreitungsrichtung des diffus reflektierten Lichts 13 derart variiert, dass das diffus reflektierten Licht 13 nicht im Wesentlichen parallel zur Richtung Z propagiert, d.h. die relative Intensität des diffus reflektierten Lichts 13 ist nicht maximal in der Richtung Z. Vielmehr ist die Strahlungscharakteristik des an der einen linienartigen Vertiefung 26-1 diffus reflektierten Lichts 13 "keulenförmig", genauer gesagt umfasst die Strahlungscharakteristik des an der einen linienartige Vertiefung 26-1 diffus reflektierten Lichts 13 im Wesentlichen zwei "Strahlungskeulen" K1 bzw. K2, welche sich auf gegenüberliegenden Seiten der Ebene E1 und im Wesentlichen symmetrisch zur Ebene E1 erstrecken (Fig. 5a). Dementsprechend breitet sich das an der einen linienartigen Vertiefung 26-1 diffus reflektierte Licht 13 in den beiden Strahlungskeulen K1 und K2 auf gegenüberliegenden Seiten der Ebene E1 derart aus, dass die relative Intensität des diffus reflektierten Lichts in zwei verschiedenen Ausbreitungsrichtungen, welche relativ zur Ebene E1 in einem Winkel $\beta1>0$ bzw. $\beta2<0$ geneigt sind, ein Maximum aufweist.

Es sei darauf hingewiesen, dass Einzelheiten der vorstehend beschriebenen Strahlungscharakteristik des an der einen linienartigen Vertiefung 26-1 diffus reflektierten Lichts 13 von einer Reihe von Parametern beeinflusst sein können, u.a. von der Beschaffenheit (Rauigkeit) der Oberfläche im Bereich der linienartigen Vertiefung 26-1, der Kontur der linienartigen Vertiefung 26-1 (bezogen auf einen Querschnitt senkrecht zur Längsrichtung der linienartigen Vertiefung 26-1) und der Richtung des einfallenden Lichts.

Wird das an der einen linienartigen Vertiefung 26-1 diffus reflektierte Licht 13 mittels einer Sensorvorrichtung 101 gemäss Fig. 2b detektiert, so wird von der Sensorfläche 102 der Sensorvorrichtung 101 Licht detektiert, welches auf der Sensorfläche 102 räumlich relativ stark inhomogen verteilt ist (wegen der vorstehend beschriebenen Strahlungscharakteristik des an der einen linienartigen Vertiefung 26-1 diffus reflektierten Lichts 13). Letzteres ist - wie erwähnt - von Nachteil hinsichtlich einer Interpolation von Sensorsignalen.

Wie Fig. 5b andeutet, kann die Homogenität des diffus reflektierten Lichts deutlich verbessert werden, wenn jeder Streubereich 23 der Inkrementalspur 20 mehrere linienartige Vertiefungen aufweist. In diesem Fall kann der Abstand zwischen zwei benachbarten linienartigen Vertiefungen geeignet gewählt (optimiert) werden, um die Homogenität der räumlichen Verteilung des Lichts, welches an der Gesamtheit aller linienartigen Vertiefungen des Streubereichs 23 diffus reflektiert wird, zu optimieren.

Im Falle der Inkrementalspur 20 gemäss Fig. 5b weist jeder Streubereich 23 (im Unterschied zur Inkrementalspur 20 gemäss Fig. 5a, wie erwähnt) drei linienartigen Vertiefungen 26-1, 26-2, 26-3 auf, wobei jeweils zwei benachbarte linienartige Vertiefungen (d.h. die Vertiefungen 26-1 und 26-2 bzw. 26-2 und 26-3) relativ zu einander einen Abstand A >0 in der Längsrichtung X der Inkrementalspur 20 aufweisen. Fig. 5b zeigt eine schematische Darstellung einer diffusen Reflexion des Lichts, welches - wie vorstehend beschrieben - auf die Inkrementalspur 20 fällt und an den jeweiligen linienartigen Vertiefungen 26-1, 26-2, 26-3 diffus reflektiert wird. Dabei ist angenommen, dass das an jeder einzelnen der linienartigen Vertiefungen 26-1, 26-2, 26-3 diffus reflektierte Licht eine Strahlungscharakteristik aufweist, welche mit der in Fig. 5a dargestellten Strahlungscharakteristik des an der einen linienartige Vertiefung 26-1 gemäss Fig. 5a diffus reflektierten Lichts 13 identisch ist.

In Fig. 5b ist das diffus reflektierte Licht 13 (analog zu Fig. 5a) durch mit dem Bezugszeichen 13 versehene Pfeile repräsentiert, welche jeweils von einer der linienartigen Vertiefung 26-1, 26-2, 26-3 ausgehen und deren Richtung die jeweilige Ausbreitungsrichtung des diffus reflektierten Lichts und deren Länge die (relative) Intensität (Strahlungsstärke) des in die jeweilige Ausbreitungsrichtung diffus reflektierten Lichts charakterisieren. In Fig. 5b stellt die Kurve 13a(1) die "Strahlungscharakteristik" des an der linienartigen Vertiefung 26-1 diffus reflektierten Lichts 13 dar, d.h. die Kurve 13a(1) stellt die relative Intensität des an der linienartigen Vertiefung 26-1 diffus reflektierten Lichts 13 in Abhängigkeit von der jeweiligen Ausbreitungsrichtung des diffus reflektierten Lichts 13 dar (analog zur Kurve 13a in Fig. 5a). Entsprechend stellen in Fig. 5b die Kurve 13a(2) die "Strahlungscharakteristik" des an der linienartigen Vertiefung 26-2 diffus reflektierten Lichts 13 und die Kurve 13a(3) die "Strahlungscharakteristik" des an der linienartigen Vertiefung 26-3 diffus reflektierten Lichts 13 dar.

Wie die Kurven 13a(1), 13a(2) und 13a(3) bzw. die Pfeile 13 in Fig. 5b andeuten, breitet sich das diffus reflektierte Licht im Wesentlichen parallel zu einer Ebene, welche sich parallel zu den in Fig. 5b angegebenen Richtungen X und Z erstreckt, und verteilt über alle Ausbreitungsrichtungen, welche auf den Halbraum HR1 gerichtet sind, aus (bedingt durch die räumliche Anordnung der linienartigen Vertiefungen 26-1, 26-2 und 26-3).

Wie die Kurven 13a(1), 13(a(2) und 13a(3) bzw. die Pfeile 13 in Fig. 5b andeuten, ist die Strahlungscharakteristik des an einer einzelnen der linienartigen Vertiefungen 26-1, 26-2 bzw. 26-3 diffus reflektierten Lichts "keulenförmig" und weist jeweils zwei "Strahlungskeulen" K1 bzw. K2 auf, welche sich symmetrisch bezüglich einer senkrecht zur Längsrichtung X ausgerichteten Ebene erstrecken (analog zur Strahlungscharakteristik des an der linienartigen Vertiefung 26-1 gemäss Fig. 5a diffus reflektierten Lichts). In Fig. 5b bezeichnen K1(1) und K2(1) die beiden Strahlungskeulen der Strahlungscharakteristik 13a(1), K1(2) und K2(2) die beiden Strahlungskeulen der Strahlungscharakteristik 13a(2) und K1(3) und K2(3) die beiden Strahlungskeulen der Strahlungscharakteristik 13a(3).

Wie Fig. 5b andeutet, resultiert die räumliche Intensitätsverteilung des an den linienartigen Vertiefungen 26-1, 26-2 bzw. 26-3 diffus reflektierten Lichts aus einer Überlagerung der Strahlungscharakteristiken 13a(1), 13(a(2) und 13a(3). In diesem Zusammenhang ist relevant, dass sich die Strahlungskeulen K1(1), K1(2) und K1(3) der Strahlungscharakteristiken 13a(1), 13(a(2) und 13a(3) unterschiedlich stark überlappen können, abhängig davon, wie gross der Abstand A zwischen den linienartigen Vertiefungen 26-1 und 26-2 bzw. den linienartigen Vertiefungen 26-2 und 26-3 ist. Entsprechend können sich die Strahlungskeulen K2(1), K2(2) und K2(3) der Strahlungscharakteristiken 13a(1), 13(a(2) und 13a(3) unterschiedlich stark überlappen, abhängig davon, wie gross der Abstand A zwischen den linienartigen Vertiefungen 26-1 und 26-2 bzw. den linienartigen Vertiefungen 26-2 und 26-3 ist. Dementsprechend ist die räumliche Intensitätsverteilung des an den linienartigen Vertiefungen 26-1, 26-2 bzw. 26-3 diffus reflektierten Lichts im Halbraum HR1 mehr oder weniger homogen bzw. inhomogen, abhängig davon, wie gross der Abstand A zwischen den linienartigen Vertiefungen 26-1 und 26-2 bzw. den linienartigen Vertiefungen 26-2 und 26-3 ist.

Ist der Abstand A derart gewählt, dass die linienartigen Vertiefungen 26-1 und 26-2 bzw. die linienartigen Vertiefungen 26-2 und 26-3 jeweils unmittelbar aneinander angrenzen (d.h. A≈0), so weisen die Strahlungskeulen K1(1), K1(2) und K1(3) der Strahlungscharakteristiken 13a(1), 13(a(2) und 13a(3) eine relativ grosse Überlappung auf, ebenso weisen die Strahlungskeulen K2(1), K2(2) und K2(3) der Strahlungscharakteristiken 13a(1), 13(a(2) und 13a(3) eine relativ grosse Überlappung auf. Unter diesen Umständen kann die räumliche Intensitätsverteilung des an den linienartigen Vertiefungen 26-1, 26-2 bzw. 26-3 diffus reflektierten Lichts im Halbraum HR1 verhältnismässig inhomogen sein. Zur Verbesserung der Homogenität der räumlichen Intensitätsverteilung des an den linienartigen Vertiefungen 26-1, 26-2 bzw. 26-3 diffus reflektierten Lichts im Halbraum HR1 kann es deshalb zweckmässig sein, den Abstand A zwischen den linienartigen Vertiefungen 26-1 und 26-2 bzw. den linienartigen Vertiefungen 26-2 und 26-3 zu vergrössern, beispielsweise derart, dass sich die Strahlungskeule K1(2) zwischen die Strahlungskeulen K1(1) und K2(1) und die Strahlungskeule K2(2) zwischen die K1(3) und K2(3) erstreckt, wie in Fig. 5b dargestellt.

Wie bereits erwähnt, können zur Optimierung der Homogenität der räumlichen Intensitätsverteilung des an den linienartigen Vertiefungen 26-1, 26-2 bzw. 26-3 diffus reflektierten Lichts die Vertiefungen 26-1, 26-2 bzw. 26-3 derart angeordnet sein, dass sie einen Abstand A von 6 $\mu$m bis 9 $\mu$m, insbesondere 7,5 $\mu$m zwischen jeweils zwei benachbarten Vertiefungen 26-1, 26-2 bzw. 26-3 aufweisen. Jede der linienartigen Vertiefungen kann dabei vorzugsweise - in der Längsrichtung der Inkrementalspur - eine Breite BL von 3,5 $\mu$m bis 12 $\mu$m, vorzugsweise 6 $\mu$m bis 9 $\mu$m, und insbesondere etwa 7 $\mu$m, aufweisen.

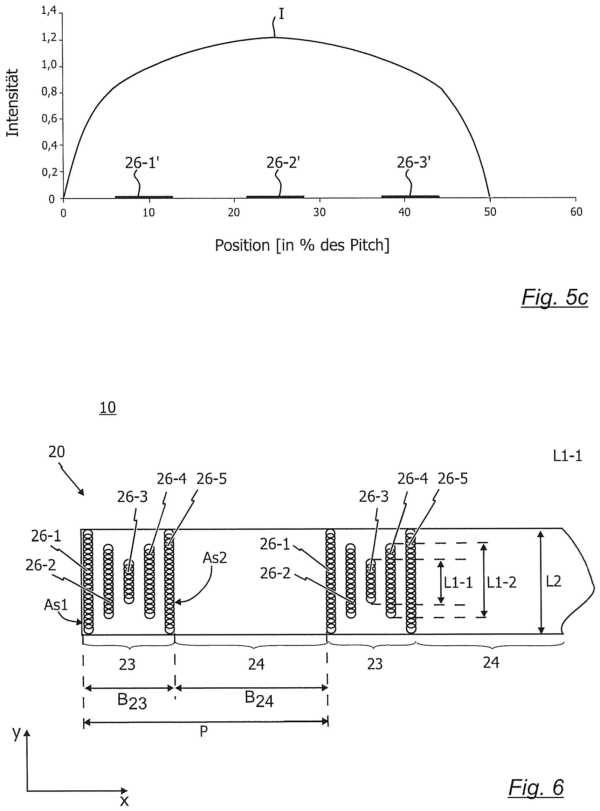

Der Darstellung gemäss Fig. 5c kann die Intensitätsverteilung I im Dunkelfeld eines der Streubereiche 23 gemäss der bevorzugten Ausführungsform nach Fig. 4 entnommen werden. Dabei ist die Intensitätsverteilung I unter der Voraussetzung bestimmt, dass die Inkrementalspur 20 gemäss Fig. 4 mittels einer Anordnung von zwei Lichtquellen 105-1 und 105-2 entsprechend Fig. 2b mit Licht, welches analog zu Fig. 2b unter einem Winkel $\alpha$ auf die Inkrementalspur 20 fällt, beleuchtet wird und die Sensorvorrichtung 101 gemäss Fig. 2b zum Abtasten der Inkrementalspur 20 zur Verfügung steht. Dabei ist analog zur Situation gemäss Fig. 2b vorausgesetzt, dass von der Sensorvorrichtung 101 ausschliesslich Licht detektiert werden kann, welches an den Vertiefungen 26-1, 26-2 und 26-3 der Streubereiche diffus gestreut wird.

In Fig. 5c stellen die mit den Bezugszeichen 26-1', 26-2' bzw. 26-3' gekennzeichneten horizontalen Linien Bereiche auf der Sensorfläche 102 der Sensorvorrichtung 101 dar, welche jeweils einer optischen Abbildung der Vertiefungen 26-1, 26-2 bzw. 26-3 entsprechen, die mittels der Abbildungsvorrichtung 104 der Sensorvorrichtung 101 auf der Sensorfläche 102 erzeugbar wäre. Dabei markiert jede der Linien 26-1', 26-2' bzw. 26-3' die Erstreckung einer optischen Abbildung einer der Vertiefungen 26-1, 26-2 bzw. 26-3 auf der Sensorfläche 102 in der Längsrichtung X. In Fig. 5c gibt die durchzogene, mit dem Bezugszeichen I versehene Linie die bei einer Dunkelfeldmessung erzeugte räumliche Verteilung der Intensität des auf die Sensorfläche 102 auftreffenden Lichts als Funktion des Ortes entlang der Längsrichtung X an.

Es lässt sich unschwer erkennen, dass die Intensitätsverteilung I aus Fig. 5c, im Gegensatz zu der herkömmlichen Intensitätsverteilung aus Fig. 1e, der rechteckigen Ausleuchtung der Sensorfläche gemäss Fig. 1c (Bezugszeichen 200) bereits sehr nahe kommt. Entlang der horizontalen Koordinatenachse aus Fig. 5c ist die Position der Linien 26-1', 26-2' bzw. 26-3' auf der Sensorfläche 102 angedeutet, um einen Vergleich zwischen der Anordnung der Linien 26-1', 26-2' bzw. 26-3' und der Intensitätsverteilung I zu ermöglichen. Demnach bilden die Vertiefungen 26-1, 26-2 und 26-3 einen Streubereich 23 aus, welcher einfallendes Licht derartig streut, dass die gezeigte Intensitätsverteilung entsteht, welche insbesondere die Hälfte, d. h. 50%, des Pitch abdeckt. Mit anderen Worten, die Sensorfläche 102 der Sensorvorrichtung 101 erfasst entlang der ersten Hälfte des Pitch die in Fig. 5c gezeigte Intensitätsverteilung, während entlang der zweiten Hälfte des Pitch kein Streulicht gemessen werden kann. Dass durch die drei linienartigen Vertiefungen 26-1, 26-2, 26-3 erhaltene, im Wesentlichen rechteckige Intensitätsmuster lässt sich durch die in Fig. 1b dargestellte, herkömmliche Sensorfläche in ein sinusförmiges Sensorsignal umwandeln.

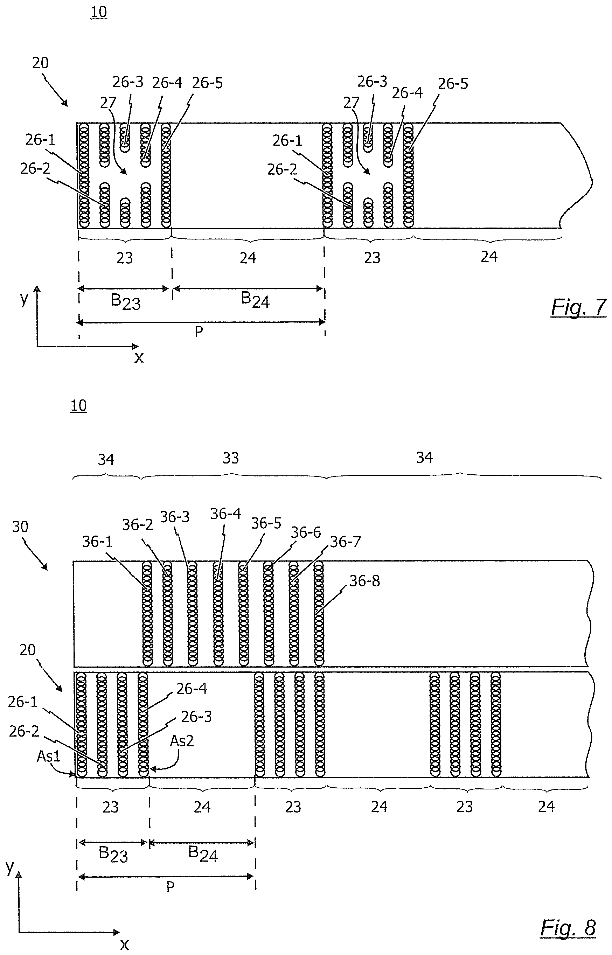

Eine Lösung gemäss der dritten und vierten Ausführungsform der erfindungsgemässen Massverkörperung 10 ist in den Figuren 6 und 7 gezeigt und ergibt sich aus der Erkenntnis, dass eine teils sehr inhomogene Lichtintensitätsverteilung entlang der Streubereiche 23 vorliegt. Insbesondere wurde festgestellt, dass in der Mitte (in Längsrichtung X gesehen) der Streubereiche 23 eine besonders hohe Lichtintensität gemessen wird, wogegen die Intensität an den Randbereichen der Streubereiche 23 verringert ist (vgl. auch Fig. 5c).

Um die Interpolierbarkeit der Sensorsignale zu verbessern, wird aus oben genannten Gründen gemäss den dritten und vierten Ausführungsformen vorgeschlagen, die linienartigen Vertiefungen 26-1, 26-2, 26-3, 26-4, 26-5 der Streubereiche 23 derart auszubilden, sodass diese mindestens eine, hier insbesondere drei, verkürzte, linienartige Vertiefungen 26-2, 26-3, 26-4 aufweisen. Wie zu erkennen ist, sind die verkürzten linienartigen Vertiefungen 26-2, 26-3, 26-4 gemäss den Figuren 6 und 7 jeweils mit einer Länge L1-1 bzw. L1-2, senkrecht zur Längsrichtung der Inkrementalspur 20, ausgebildet, welche kürzer ist als eine zweite Länge L2 weiterer linienartiger Vertiefungen 26-1 bzw. 26-5. Dabei werden insbesondere die sich zentral innerhalb der Streubereiche 23 befindlichen linienartigen Vertiefungen 26-2, 26-3 sowie 26-4 verkürzt, um die erhöhte Intensität im Zentrum der Streubereiche zu reduzieren.

Speziell in der dritten Ausführungsform gemäss Fig. 6 wird vorgeschlagen, dass die verkürzten, linienartigen Vertiefungen 26-2, 26-3, 26-4 einen gegenüber den weiteren, äusseren linienartigen Vertiefungen 26-1, 26-5 verkürzte Anfangs- und Endbereiche aufweisen. Mit anderen Worten, die verkürzten, linienartigen Vertiefungen 26-2, 26-3, 26-4 sind wie in den Figuren dargestellt zwar immer noch mittig entlang der Längsachse der Inkrementalspur 20 ausgerichtet, weisen jedoch eine verkürzte Länge auf. Demnach wird die Breite der Inkrementalspur 20 (in Querrichtung Y) gemäss dieser Ausführungsform insbesondere durch die weiteren linienartigen Vertiefungen 26-1, 26-5 definiert.

Alternativ zu der in Fig. 6 dargestellten, dritten Ausführungsform können die linienartigen Vertiefungen 26-1, 26-2, 26-3, 26-4, 26-5 auch gemäss der vierten Ausführungsform nach Fig. 7 ausgebildet sein. Im Einzelnen ist es dabei vorgesehen, dass die verkürzten, linienartigen Vertiefungen 26-2, 26-3, 26-4 gegenüber den weiteren linienartigen Vertiefungen 26-1, 26-5 einen vorzugsweise zentralen Freiraum 27 aufweisen. Der zentrale Freiraum 27 bildet dabei eine Unterbrechung zwischen einem Anfangs- und Endbereich der verkürzten linienartigen Vertiefungen 26-2, 26-3, 26-4 aus. Mit anderen Worten sind die verkürzten linienartigen Vertiefungen 26-2, 26-3, 26-4 zweigeteilt und an den Randbereichen der Inkrementalspur 20 angeordnet. Auch hierdurch wird eine Verringerung der Intensität im Zentrum der Streubereiche 23 erreicht, wodurch eine besonders homogene, rechteckige Intensitätsverteilung des diffus reflektierten Lichts entlang der Streubereiche 23 erzielt wird.

An dieser Stelle sei angemerkt, dass eine Kombination der in den Figuren 6 bis 7 dargestellten dritten und vierten Ausführungsformen durchaus denkbar ist. So können die verkürzten linienartigen Vertiefungen 26-2, 26-3 bzw. 26-4 selbstverständlich auch eine Kombination der in den dritten und vierten Ausführungsformen dargestellten Arten von verkürzten linienartigen Vertiefungen 26-2, 26-3 und 26-4 enthalten. Auch kann natürlich die Anzahl an linienartigen Vertiefungen gemäss den dritten und vierten Ausführungsformen variiert werden, solange mindestens zwei linienartige Vertiefungen vorhanden sind und die Breite der Streubereiche 23 die Hälfte des Pitch P nicht überschreitet.

Schliesslich ist eine fünfte Ausführungsform der erfindungsgemässen Massverkörperung 10 in Fig. 8 gezeigt. Dementsprechend weist die Massverkörperung 10 zusätzlich zu der mindestens einen ersten Inkrementalspur 20 eine Referenzspur 30 auf, welche insbesondere parallel neben der ersten Inkrementalspur 20 angeordnet ist. Die Referenzspur 30 ist dazu ausgebildet, eine absolute Position eines Messkopfes entlang der Massverkörperung 10 anzugeben. Hierzu weist die Referenzspur 30 in Längsrichtung X alternierend angeordnete Referenzstreubereiche 33 und Spiegelbereiche 34 auf. Die Referenzstreubereiche 33 weisen, wie auch die Streubereiche 23 der ersten Inkrementalspur 20, eine Vielzahl linienartiger Vertiefungen 36-1, 36-2, 36-3, 36-4, 36-5, 36-6, 36-7 und 36-8 auf. Die linienartigen Vertiefungen 36-1, 36-2, 36-3, 36-4, 36-5, 36-6, 36-7 und 36-8 sind dazu ausgebildet, einfallendes Licht diffus zu reflektieren. Insbesondere können diese, ähnlich wie die linienartigen Vertiefungen 26-1, 26-2, 26-3, 26-4 der Streubereiche 22, durch eine Überlappung von runden Vertiefungen ausgebildet sein.

Die Spiegelbereiche 34, hingegen, weisen eine im Wesentlichen glatte Oberfläche auf, welche beispielsweise einer polierten Metalloberfläche entspricht. Wie oben bereits angedeutet, befinden sich die Referenzstreubereiche 33 dabei insbesondere an bekannten Stellen der Massverkörperung 10, welche eine Recheneinheit dazu verwenden kann, um die absolute Position des Messkopfes zu bestimmen. Hierzu wird mit Hilfe der ersten Inkrementalspur 20 die Lageänderung des Messkopfes gegenüber den Referenzstreubereichen 33 der Referenzspur 30 gemessen.

Selbstverständlich kann die Referenzspur 30 bei jeder der zuvor genannten Ausführungsformen der erfindungsgemässen Massverkörperung 10 Einsatz finden.

Zur Beleuchtung der erfindungsgemässen Massverkörperungen ist beispielsweise Licht mit einer Wellenlänge im Bereich zwischen 300 nm und 1.5 $\mu$m geeignet, d.h. die Erstreckung einer der linienartigen Vertiefungen 26-1, 26-2, 26-3, 26-4 bzw. 26-5 eines der Streubereiche 23 in der Längsrichtung X der jeweiligen Massverkörperung kann um ein Vielfaches grösser als die Wellenlänge des Lichts sein, welches zur Beleuchtung der jeweiligen Massverkörperung verwendet wird. Weiterhin ist die Grösse des Winkels $\alpha$, unter dem das zur Beleuchtung verwendete Licht auf die jeweilige Massverkörperung fallen kann, relativ unkritisch im Hinblick auf die Grösse der Sensorsignale, sodass der Winkel $\alpha$ in einem relativ grossen Bereich variiert werden kann, z.B. in einem Bereich zwischen 30° und 70°.

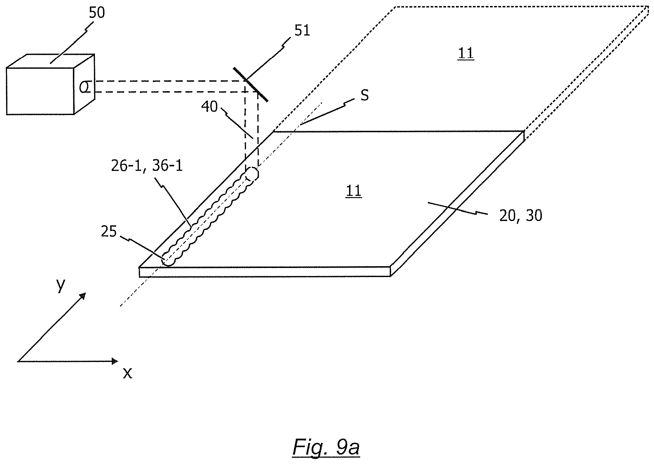

Der Darstellung gemäss Figur 9a ist eine schematische Darstellung des Verfahrens zum Aufbringen einer Massverkörperung 10 auf einer Metalloberfläche 11 zu entnehmen. Hierbei wird zum Einbringen der im Wesentlichen runden Vertiefungen 25 ein gepulster Laser 50 bereitgestellt. Dieser erzeugt ein im Wesentlichen rundes Strahlenbündel 40, mit welchem die Metalloberfläche 11 im Wesentlichen senkrecht beaufschlagt wird. Dabei wird jede der Vertiefungen 25 dadurch erzeugt, dass das im Wesentlichen runde Strahlenbündel 40 für die Zeitdauer eines Laserimpulses an verschiedenen Stellen entlang der Metalloberfläche 11 angeordnet wird. Durch die Energie des Strahlenbündels 40 wird die Metalloberfläche 11 angeschmolzen und teilweise verdampft, wodurch die im Wesentlichen runden Vertiefungen 25 entstehen. Zwischen den Pulsen des Pulslasers 50 wird bspw. ein Spiegel 51 derart senkrecht zur Längsrichtung verstellt, sodass das Strahlenbündel 40 entlang der Achse S verfahren wird. In der neuen Verfahrposition wird wiederum Wärmeenergie in die Metalloberfläche 11 für die Zeitdauer eines Laserpulses eingebracht, um eine weitere, runde Vertiefung 25 zu erzeugen.

Das Strahlenbündel 40 wird zwischen den einzelnen Pulsen jeweils soweit entlang der Achse S verfahren, sodass sich die im Wesentlichen runden Vertiefungen 25 überlappen. Insbesondere überlappen sich die im Wesentlichen runden Vertiefungen 25 dabei derart, dass eine der mindestens zwei linienartigen Vertiefungen 26-1 bzw. 36-1 entsteht, welche im Wesentlichen senkrecht gegenüber der Längsrichtung X der Inkrementalspur 20 bzw. der Referenzspur 30 ausgerichtet ist. Dieser Vorgang wird selbstverständlich für alle gewünschten linienartigen Vertiefungen 26-1, 26-2, 26-3, 26-4 bzw. 26-5 wiederholt.

Der Durchmesser des Strahlenbündels 40 wird zur Erzeugung der runden Vertiefungen 25 derart gewählt, dass die Vertiefungen 25 einen Durchmesser von 3,5 $\mu$m bis 12 $\mu$m, vorzugsweise 6 $\mu$m bis 9 $\mu$m, und insbesondere etwa 7 $\mu$m, aufweisen. Hierdurch werden linienartige Vertiefungen mit einer Breite von ca. 8 $\mu$m erzeugt, welche der Breite des bevorzugten Ausführungsbeispiels V5 entsprechen. Das Strahlenbündel 40 des Lasers 50 wird mittels des Spiegels 51 derart weiter verfahren, sodass eine Überlappung der im Wesentlichen runden Vertiefungen 25 von mindestens 75% entsteht. Mit andern Worten wird durch die Verfahrbewegung des Strahlenbündels 40 die linienartige Vertiefung 26-1 bzw. 36-1 jeweils maximal um 25% des Durchmessers der runden Vertiefungen 25 erweitert.

Die bevorzugten Laserparameter für das oben genannte Verfahren können der unten stehenden Tabelle 2 entnommen werden und beziehen sich auf die Herstellung linienartiger Vertiefungen von etwa 1mm:

**Tabelle 2**

| Laserleistung | ca. 0,25W | Pulsfrequenz | ca. 60 kHz |
|---|---|---|---|
| Energie pro Puls | ca. 4,3 $\mu$J | Verfahrgeschwindigkeit | ca. 100mm/s |
| Pulse pro linienartiger. Vertiefung | ca. 600 | Energie pro linienartiger Vertiefung | ca. 2,5 mJ |

Als Laser 50 eignen sich beispielsweise Dioden gepumpte Festkörperlaser, wie Vanadat-Laser, mit einer Wellenlänge von etwa 355 nm.

Es sei an dieser Stelle angemerkt, dass die linienartigen Vertiefungen 26-1, 26-2, 26-3, 26-4, 26-5 bzw. 36-1, 36-2, 36-3, 36-4, 36-5, 36-6 der erfindungsgemässen Massverkörperung 10 nicht zwangsweise aus einer Vielzahl runder Vertiefungen 25 bestehen müssen. Vielmehr können die einzelnen linienartigen Vertiefungen jeweils mit einem Arbeitsschritt gefertigt werden. Ein Beispiel hierfür ist schematisch in der Darstellung gemäss Fig. 9b dargestellt. Gemäss dieser Ausführungsform kann der Laserstrahl 40 beispielsweise, vor dem Beaufschlagen der Metalloberfläche, über Abbildungsvorrichtungen 60 bzw. 62 auf ein Maskierungselement 64 gerichtet werden. Das Maskierungselement 64 weist dabei mindestens zwei linienartige Öffnungen 66-1, 66-2, 66-3 auf, wobei ein Abbild der linienartigen Öffnungen 66-1, 66-2, 66-3 durch den Laserstrahl auf die Metalloberfläche 11 abgebildet wird.

Das Abbild der linienartigen Öffnungen 66-1, 66-2, 66-3 ist so konfiguriert, sodass mindestens ein Streubereich 23 aus mindestens zwei linienartigen Vertiefungen 26-1, 26-2, 26-3, 36-1, 36-2, 36-3 entsteht. In der hier dargestellten Ausführungsform handelt es sich beispielsweise um drei linienartige Öffnungen 66-1, 66-2, 66-3, welche dazu dienen drei entsprechende linienartige Vertiefungen 26-1, 26-2, 26-3 bzw. 36-1, 36-2, 36-3 auf der Metalloberfläche 11 herzustellen.

Auch ist es generell vorstellbar, dass die linienartigen Vertiefungen der Massverkörperung 10 durch Ätzen oder Prägen auf die Metalloberfläche aufgebracht werden. Auch die derart hergestellten linienartigen Vertiefungen könnten die vorteilhaften Anordnungen aufweisen, welche den Ausführungsbeispielen gemäss den Figuren 2a bis 7 entsprechen, um maximalen Kontrast bei ausreichender Interpolierbarkeit zu erreichen.

**Patentansprüche**

1.  Massverkörperung (10) für Inkrementalgeber, wobei die Massverkörperung (10) eine Inkrementalspur (20) mit in Längsrichtung (x) alternierend angeordneten Streubereichen (23) und Spiegelbereichen (24) aufweist,
    wobei die Streubereiche (23) je mindestens zwei linienartige Vertiefungen (26-1, 26-2, 26-3, 26-4, 26-5) aufweisen, welche sich im Wesentlichen senkrecht zur Längsrichtung (x) der Inkrementalspur (20) erstrecken und in der Längsrichtung (x) der Inkrementalspur (20) in einer Reihe hintereinander angeordnet sind und dazu ausgebildet sind, einfallendes Licht diffus zu reflektieren, wobei die Spiegelbereiche (24) der Inkrementalspur (20) eine im Wesentlichen glatte Oberfläche aufweisen, welche dazu ausgebildet ist, einfallendes Licht spiegelnd zu reflektieren,
    wobei die Inkrementalspur (20) ferner einen Pitch (P) aufweist, welcher sich aus einer Addition der Breite ($B_{23}$) eines der Streubereiche (23) und der Breite ($B_{24}$) eines der Spiegelbereiche (24) ergibt,
    und wobei jeder Streubereich (23), in Längsrichtung (x) der Inkrementalspur (20), eine Breite ($B_{23}$) aufweist, die kleiner als die Hälfte des Pitch (P) ist, wobei jeweils zwei der linienartigen Vertiefungen (26-1, 26-2, 26-3, 26-4, 26-5) eines Streubereichs (23) an einander gegenüberliegenden Aussenseiten (As1, As2) des einen Streubereichs (23) angeordnet sind und die Breite ($B_{23}$) des einen Streubereichs (23) in Längsrichtung (x) der Inkrementalspur (20) begrenzen,
    **dadurch gekennzeichnet, dass** die mindestens zwei linienartigen Vertiefungen (26-1, 26-2, 26-3, 26-4, 26-5) der Streubereiche (23) jeweils aus einer Vielzahl im Wesentlichen runder Vertiefungen (25) ausgebildet sind, welche einander überlappend angeordnet sind.

2.  Massverkörperung (10) nach Anspruch 1,
    wobei die Breite ($B_{23}$) der Streubereiche (23) grösser als 10% der Breite des Pitch (P) ist.

3.  Massverkörperung (10) nach Anspruch 1 oder 2,
    wobei die Streubereiche (23) eine Breite ($B_{23}$) aufweisen, welche 30% bis 45% des Pitch (P), vorzugsweise 35% bis 40% des Pitch (P), und insbesondere etwa 38% des Pitch (P), entspricht.

4.  Massverkörperung (10) nach einem der Ansprüche 1 bis 3, wobei der Abstand (A) zwischen zwei benachbarten parallelen, linienartigen Vertiefungen (26-1, 26-2, 26-3, 26-4, 26-5) grösser als Null und kleiner als die Hälfte des Pitch (P) abzüglich dem zweifachen einer Breite der linienartigen Vertiefungen (26-1, 26-2, 26-3, 26-4, 26-5), in Längsrichtung (x) der Inkrementalspur (20), ist.

5. Massverkörperung (10) nach einem der vorhergehenden Ansprüche,
wobei die Streubereiche (23) jeweils mindestens drei parallele, linienartige Vertiefungen (26-1, 26-2, 26-3, 26-4, 26-5) aufweisen, welche senkrecht gegenüber der Längsrichtung (x) der Inkrementalspur (20) ausgerichtet und in einem Abstand (A) von 6 bis 9 μm, vorzugsweise etwa 7,5 μm voneinander beabstandet sind.

6. Massverkörperung (10) nach einem der vorhergehenden Ansprüche,
wobei jede der linienartigen Vertiefungen (26-1, 26-2, 26-3, 26-4, 26-5) - in der Längsrichtung (x) der Inkrementalspur (20) - eine Breite (BL) von 3,5 μm bis 12 μm, vorzugsweise 6 μm bis 9 μm, und insbesondere etwa 7 μm, aufweist.

7. Massverkörperung (10) nach einem der vorhergehenden Ansprüche,
wobei die Streubereiche (23) je mindestens eine verkürzte, linienartigen Vertiefung (26-2, 26-3, 26-4) mit einer ersten Länge (L1-1, L1-2), senkrecht zur Längsrichtung (x) der Inkrementalspur (20), aufweist, welche kürzer ist als eine zweite Länge (L2) mindestens einer weiteren linienartigen Vertiefung (26-1, 26-5), wobei die mindestens eine verkürzte linienartige Vertiefung (26-2, 26-3, 26-4) derart ausgebildet ist, dass eine homogene Intensitätsverteilung des diffus reflektierten Lichts entlang der Streubereiche (23) entsteht.

8. Massverkörperung (10) nach Anspruch 7,
wobei die mindestens eine verkürzte, linienartige Vertiefung (26-2, 26-3, 26-4) einen gegenüber der mindestens einen weiteren linienartigen Vertiefung (26-1, 26-5) verkürzten Anfangs- und Endbereich aufweist.

9. Massverkörperung (10) nach Anspruch 7,
wobei die mindestens eine verkürzte, linienartige Vertiefung (26-2, 26-3, 26-4) gegenüber der mindestens einen weiteren linienartigen Vertiefung (26-1, 26-5) einen vorzugsweise zentralen Freiraum (27) aufweist, welcher eine Unterbrechung zwischen einem Anfangs- und Endbereich der verkürzten linienartigen Vertiefung (26-2, 26-3, 26-4) ausbildet.

10. Massverkörperung (10) nach einem der vorhergehenden Ansprüche,
wobei die Massverkörperung (10) ferner eine Referenzspur (30) aufweist, welche parallel neben der Inkrementalspur (20) angeordnet ist und dazu ausgebildet ist, eine absolute Position eines Messkopfes entlang der Massverkörperung (10) anzugeben.

11. Massverkörperung (10) nach Anspruch 10,
wobei die Referenzspur (30) in Längsrichtung (x) alternierend angeordnete Referenzstreubereiche (33) und Spiegelbereiche (34) aufweist, wobei die Referenzstreubereiche (33) der Referenzspur (30) je eine Vielzahl linienartiger Vertiefungen (36-1, 36-2, 36-3, 36-4, 36-5, 36-6) aufweist, welche dazu ausgebildet sind, einfallendes Licht diffus zu reflektieren, und wobei die Spiegelbereiche (34) der Referenzspur (30) eine im Wesentlichen glatte Oberfläche aufweisen.

12. Inkrementalgeber welcher folgendes aufweist:

• eine Massverkörperung (10) nach einem der vorhergehenden Ansprüche; sowie
• mindestens eine Sensorvorrichtung (101), welche dazu ausgebildet ist die Inkrementalspur (20) der Massverkörperung (10) optisch abzutasten.

13. Inkrementalgeber nach Anspruch 12,
wobei die mindestens eine Sensorvorrichtung (101) einen relativ zu der Massverkörperung (10) bewegbaren Messkopf mit einer optischen Abbildungseinrichtung (104) zur Erzeugung eines Abbilds der Inkrementalspur (20) sowie einer Vielzahl von Photosensoren (103) zum Erfassen des Abbildes aufweist, und wobei die Sensorvorrichtung (101) derart ausgebildet ist, dass die Photosensoren (103) beim Erfassen des Abbilds ein sinusförmiges Ausgangssignal erzeugen.

14. Inkrementalgeber nach Anspruch 13,
wobei die Abbildungseinrichtung (104) Sensorvorrichtung (101) zum Erzeugen eines sinusförmigen Ausgangsignals eine im Wesentlichen elliptische Abtastblende aufweist.

**15.** Inkrementalgeber nach Anspruch 13,
wobei die Photosensoren (103) der Sensorvorrichtung (101) zum Erzeugen eines sinusförmigen Ausgangssignals eine im Wesentlichen elliptische Sensorfläche aufweisen.

**16.** Verfahren zum Aufbringen einer Massverkörperung (10) gemäss einem der Ansprüche 1 bis 11 auf eine Metalloberfläche (11), wobei das Verfahren die folgenden Schritte aufweist:

• Bereitstellen eines gepulsten Lasers (50) zur Erzeugung eines Laserstrahls (40);
• Beaufschlagen der Metalloberfläche (11) mit dem Laserstrahl (40) des Lasers (50) derart, dass ein Streubereich (23) aus mindestens zwei linienartigen Vertiefungen (26-1, 26-2, 26-3, 26-4, 26-5) entsteht, welcher Streubereich - in der Längsrichtung (x) der Inkrementalspur (20) - eine Breite ($B_{23}$) aufweist, die kleiner als die Hälfte des Pitch (P) der Massverkörperung (10) ist,

wobei das Verfahren ferner folgendes aufweist:

• Die Metalloberfläche (11) wird für die Zeitdauer eines ersten Laserpulses derart mit dem Laserstrahl (40) beaufschlagt, dass eine erste im Wesentlichen runde Vertiefung (25) entsteht;
• Verfahren des Laserstrahls (40) senkrecht zur Längsrichtung (X) der Inkrementalspur (20) und Beaufschlagen der Mettaloberfläche mit einem zweiten Laserpuls, dass eine weitere im Wesentlichen runde Vertiefung (25) in einer neuen Verfahrposition erzeugt wird,

wobei der Laserstrahl (40) zwischen den einzelnen Pulsen jeweils soweit senkrecht zur Längsrichtung (X) der Inkrementalspur (20) verfahren wird, dass sich die im Wesentlichen runden Vertiefungen (25) überlappen, dass eine der mindestens zwei linienartigen Vertiefungen (26-1, 26-2, 26-3, 26-4, 26-5) entsteht, welche im Wesentlichen senkrecht gegenüber der Längsrichtung (X) der Inkrementalspur (20) ausgerichtet ist.

**17.** Verfahren nach Anspruch 16,
wobei der Laserstrahl (40) ein im Wesentlichen rundes Strahlenbündel aufweist und derart gewählt wird, dass die im Wesentlichen runden Vertiefungen einen Durchmesser von 3,5 $\mu$m bis 12 $\mu$m, vorzugsweise 6 $\mu$m bis 9 $\mu$m, und insbesondere etwa 7 $\mu$m, aufweisen.

**18.** Verfahren nach Anspruch 16,
wobei der Laserstrahl (40) vor dem Beaufschlagen der Metalloberfläche (11) über ein Maskierungselement (64) geführt wird, welches mindestens zwei linienartige Öffnungen (66-1, 66-2, 66-3) aufweist, und wobei ein Abbild der linienartigen Öffnungen (66-1, 66-2, 66-3) derart durch den Laserstrahl (40) auf die Metalloberfläche (11) abgebildet wird, dass mindestens ein Streubereich aus mindestens zwei linienartigen Vertiefungen (26-1, 26-2, 26-3, 26-4, 26-5) entsteht.

**19.** Verfahren nach einem der Ansprüche 16 bis 18, wobei der Laser (50) mit einer derartigen Leistung betrieben wird, dass die linienartigen Vertiefungen (26-1, 26-2, 26-3, 26-4, 26-5) eine Tiefe von etwa 0,5 $\mu$m aufweisen.

**20.** Verfahren nach einem der Ansprüche 16 bis 19, wobei der Laser (50) mit einer Pulsfrequenz von etwa 60 kHz betrieben wird.

## Claims

**1.** Measurement scale (10) for an incremental encoder wherein the measurement scale (10) has an incremental track (20) with scattering regions (23) and reflective regions (24) arranged alternatingly in the longitudinal direction (x), wherein the scattering regions (23) each have at least two linear recesses (26-1, 26-2, 26-3, 26-4, 26-5) which extend substantially perpendicular to the longitudinal direction (x) of the incremental track (20) and are arranged consecutively in a row in the longitudinal direction (x) of the incremental track (20) and are configured to diffusely reflect incident light
wherein the reflective regions (24) of the incremental track (20) have a substantially smooth surface which is configured to specularly reflect incident light,
wherein the incremental track (20) also has a pitch (P) which results from adding the width ($B_{23}$) of one of the scattering regions (23) and the width ($B_{24}$) of one of the reflective regions (24),
and wherein each scattering region (23), in the longitudinal direction (x) of the incremental track (20), has a width

($B_{23}$) which is smaller than half the pitch (P) wherein respectively two of the linear recesses (26-1, 26-2, 26-3, 26-4, 26-5) of a scattering region (23) are arranged on opposing outer sides (As1, As2) of the one scattering region (23) and delimit the width ($B_{23}$) of the one scattering region (23) in the longitudinal direction (x) of the incremental track (20), **characterised in that** the at least two linear recesses (26-1, 26-2, 26-3, 26-4, 26-5) of the scattering regions (23) are respectively configured from a plurality of substantially round recesses (25) which are arranged overlapping each other.

2. Measurement scale (10) according to claim 1,
wherein the width ($B_{23}$) of the scattering regions (23) is greater than 10% of the width of the pitch (P).

3. Measurement scale (10) according to claim 1 or 2,
wherein the scattering regions (23) have a width ($B_{23}$) which corresponds to 30% to 45% of the pitch (P), preferably to 35% to 40% of the pitch (P), and in particular approximately 38% of the pitch (P).

4. Measurement scale (10) according to any one of claims 1 to 3,
wherein the distance (A) between two adjacent parallel, linear recesses (26-1, 26-2, 26-3, 26-4, 26-5) is greater than zero and smaller than half the pitch (P) minus twice a width of the linear recesses (26-1, 26-2, 26-3, 26-4, 26-5) in the longitudinal direction (x) of the incremental track (20).

5. Measurement scale (10) according to any one of the preceding claims,
wherein the scattering regions (23) respectively have at least three parallel, linear recesses (26-1, 26-2, 26-3, 26-4, 26-5) which are aligned perpendicular with respect to the longitudinal direction (x) of the incremental track (20) and are spaced at a distance (A) of 6 to 9 $\mu$m, preferably approximately 7.5 $\mu$m from each other.

6. Measurement scale (10) according to any one of the preceding claims,
wherein each of the linear recesses (26-1, 26-2, 26-3, 26-4, 26-5), in the longitudinal direction (x) of the incremental track (20), has a width (BL) of 3.5 $\mu$m to 12 $\mu$m, preferably 6 $\mu$m to 9 $\mu$m, and in particular approximately 7$\mu$m.

7. Measurement scale (10) according to any one of the preceding claims,
wherein the scattering regions (23) each have at least one shortened, linear recess (26-2, 26-3, 26-4) with a first length (L1-1, L1-2) perpendicular to the longitudinal direction (x) of the incremental track (20) which is shorter than a second length (L2) of at least one further linear recess (26-1, 26-5) wherein the at least one shortened linear recess (26-2, 26-3, 26-4) is configured such that a homogenous intensity distribution of the diffusely reflected light results along the scattering regions (23).

8. Measurement scale (10) according to claim 7,
wherein the at least one shortened, linear recess (26-2, 26-3, 26-4) has a beginning and end region that is shortened with respect to the at least one further linear recess (26-1, 26-5).

9. Measurement scale (10) according to claim 7,
wherein the at least one shortened, linear recess (26-2, 26-3, 26-4) has a preferably central free space (27) with respect to the at least one further linear recess (26-1, 26-5), said free space forming an interruption between a start and end region of the shortened linear recess (26-2, 26-3, 26-4).

10. Measurement scale (10) according to any one of the preceding claims,
wherein the measurement scale (10) also has a reference track (30) which is arranged parallel next to the incremental track (20) and is configured to indicate an absolute position of a measuring head along the measurement scale (10).

11. Measurement scale (10) according to claim 10,
wherein the reference track (30) has reference scattering regions (33) and reflective regions (34) arranged alternatingly in the longitudinal direction (x) wherein the reference scattering regions (33) of the reference track (30) each have a plurality of linear recesses (36-1, 36-2, 36-3, 36-4, 36-5, 36-6) which are configured to diffusely reflect incident light and wherein the reflective regions (34) of the reference track (30) have a substantially smooth surface.

12. Incremental encoder which has the following:

   • a measurement scale (10) according to any one of the preceding claims; as well as
   • at least one sensor device (101) which is configured to optically scan the incremental track (20) of the measurement scale (10).

**13.** Incremental encoder according to claim 12,
wherein the at least one sensor device (101) has a measuring head movable relative to the measurement scale (10) with an optical imaging device (104) for generating an image of the incremental track (20) as well as a plurality of photo sensors (103) for detecting the image and wherein the sensor device (101) is configured such that the photo sensors (103) generate a sinusoidal output signal when the image is detected.

**14.** Incremental encoder according to claim 13,
wherein the imaging device (104) of the sensor device (101) has a substantially elliptical scanning aperture to generate a sinusoidal output signal.

**15.** Incremental encoder according to claim 13,
wherein the photo sensors (103) of the sensor device (101) have a substantially elliptical sensor surface to generate a sinusoidal output signal.

**16.** Method for applying a measurement scale (10) according to any one of claims 1 to 11 on a metal surface (11), wherein the method comprises the following steps:

• Providing a pulsed laser (50) to generate a laser beam (40);
• Applying the laser beam (40) of the laser (50) on the metal surface (11) such that a scattering region (23) results from at least two linear recesses (26-1, 26-2, 26-3, 26-4, 26-5), said scattering region has a width ($B_{23}$) in the longitudinal direction (x) of the incremental track (20) which is smaller than half the pitch (P) of the measurement scale (10)

wherein the method also comprises the following:

• The laser beam (40) is applied to the metal surface (11) for the duration of a first laser pulse such that a first substantially round recess (25) results;
• Moving the laser beam (40) perpendicular to the longitudinal direction (x) of the incremental track (20) and applying a second laser pulse to the metal surface such that a further substantially round recess (25) is generated in a new movement position, wherein the laser beam (40) is moved between the individual pulses respectively so far perpendicular to the longitudinal direction (x) of the incremental track (20) that the substantially round recesses (25) overlap such that one of the at least two linear recesses (26-1, 26-2, 26-3, 26-4, 26-5) results

which is aligned substantially perpendicular with respect to the longitudinal direction (x) of the incremental track (20).

**17.** Method according to claim 16,
wherein the laser beam (40) has a substantially round beam of rays and is selected such that the substantially round recesses have a diameter of 3.5 $\mu$m to 12 $\mu$m, preferably 6 $\mu$m to 9 $\mu$m, and in particular approximately 7 $\mu$m.

**18.** Method according to claim 16,
wherein the laser beam (40) is guided via a masking element (64) prior to being applied to the metal surface (11), said masking element has at least two linear openings (66-1, 66-2, 66-3) and wherein an image of the linear openings (66-1, 66-2, 66-3) is imaged on the metal surface (11) by the laser beam (40) such that at least one scattering region results from at least two linear recesses (26-1, 26-2, 26-3, 26-4, 26-5).

**19.** Method according to any one of claims 16 to 18,
wherein the laser (50) is operated with such an output that the linear recesses (26-1, 26-2, 26-3, 26-4, 26-5) have a depth of approximately 0.5 $\mu$m.

**20.** Method according to any one of claims 16 to 19,
wherein the laser (50) is operated at a pulse frequency of approximately 60 kHz.

**Revendications**

**1.** Mesure matérialisée (10) pour codeur incrémental, laquelle mesure matérialisée (10) comporte une piste incrémentale (20) avec des zones de diffusion (23) et des zones de réflexion (24) disposées en alternance dans le sens de la longueur (x),

dans laquelle les zones de diffusion (23) comportent chacune au moins deux creux linéaires (26-1, 26-2, 26-3, 26-4, 26-5) qui s'étendent globalement perpendiculairement au sens de la longueur (x) de la piste incrémentale (20) et qui sont disposés les uns derrière les autres en une rangée dans le sens de la longueur (x) de la piste incrémentale (20) et sont conçus pour réfléchir de manière diffuse une lumière incidente,

dans laquelle les zones de réflexion (24) de la piste incrémentale (20) ont une surface globalement lisse qui est conçue pour réfléchir en miroir une lumière incidente,

dans laquelle la piste incrémentale (20) présente en outre un pas (P) qui résulte d'une addition de la largeur ($B_{23}$) de l'une des zones de diffusion (23) et de la largeur ($B_{24}$) de l'une des zones de réflexion (24),

et dans laquelle chaque zone de diffusion (23) présente dans le sens de la longueur (x) de la piste incrémentale (20) une largeur ($B_{23}$) qui est inférieure à la moitié du pas (P), à chaque fois deux des creux linéaires (26-1, 26-2, 26-3, 26-4, 26-5) d'une zone de diffusion (23) étant disposés au niveau de côtés extérieurs opposés (As1, As2) de ladite zone de diffusion (23) et limitant la largeur ($B_{23}$) de la zone de diffusion (23) dans le sens de la longueur (x) de la piste incrémentale (20),

**caractérisée en ce que** les au moins deux creux linéaires (26-1, 26-2, 26-3, 26-4, 26-5) des zones de diffusion (23) sont réalisés à chaque fois à partir d'une multiplicité de creux globalement ronds qui sont disposés de manière à se chevaucher les uns les autres.

2. Mesure matérialisée (10) selon la revendication 1,
dans laquelle la largeur ($B_{23}$) des zones de diffusion (23) est supérieure à 10 % de la largeur du pas (P).

3. Mesure matérialisée (10) selon la revendication 1 ou 2,
dans laquelle les zones de diffusion (23) ont une largeur ($B_{23}$) qui correspond à 30 % à 40 % du pas (P), de préférence 35 % à 40 % du pas (P), et en particulier environ 38 % du pas (P).

4. Mesure matérialisée (10) selon l'une des revendications 1 à 3,
dans laquelle la distance (A) entre deux creux linéaires (26-1, 26-2, 26-3, 26-4, 26-5) parallèles voisins est supérieure à zéro et inférieure à la moitié du pas (P) moins le double d'une largeur des creux linéaires (26-1, 26-2, 26-3, 26-4, 26-5) dans le sens de la longueur (x) de la piste incrémentale (20).

5. Mesure matérialisée (10) selon l'une des revendications précédentes,
dans laquelle les zones de dispersion (23) comportent à chaque fois au moins trois creux linéaires parallèles (26-1, 26-2, 26-3, 26-4, 26-5) qui sont orientés perpendiculairement au sens de la longueur (x) de la piste incrémentale (20) et qui sont à une distance (A) les uns des autres qui est comprise entre 6 et 9 $\mu$m, de préférence égale à 7,5 $\mu$m environ.

6. Mesure matérialisée (10) selon l'une des revendications précédentes,
dans laquelle chacun des creux linéaires (26-1, 26-2, 26-3, 26-4, 26-5) a - dans le sens de la longueur (x) de la piste incrémentale (20) - une largeur (BL) de 3,5 $\mu$m à 12 $\mu$m, de préférence de 6 $\mu$m à 9 $\mu$m, et en particulier de 7 $\mu$m environ.

7. Mesure matérialisée (10) selon l'une des revendications précédentes,
dans laquelle les zones de diffusion (23) comportent chacune au moins un creux linéaire raccourci (26-2, 26-3, 26-4) avec une première longueur (L1-1, L1-2), perpendiculairement au sens de la longueur (x) de la piste incrémentale (20), lequel creux linéaire raccourci est plus court qu'une deuxième longueur (L2) d'au moins un autre creux linéaire (26-1, 26-5), l'au moins un creux linéaire raccourci (26-2, 26-3, 26-4) étant réalisé de telle sorte qu'une distribution d'intensité homogène de la lumière réfléchie de manière diffuse apparaît le long des zones de diffusion (23).

8. Mesure matérialisée (10) selon la revendication 7,
dans laquelle l'au moins un creux linéaire raccourci (26-2, 26-3, 26-4) a une zone de début et une zone de fin qui sont raccourcies par rapport à l'au moins un autre creux linéaire (26-1, 26-5).

9. Mesure matérialisée (10) selon la revendication 7,
dans laquelle l'au moins un creux linéaire raccourci (26-2, 26-3, 26-4) a, par rapport à l'au moins un autre creux linéaire (26-1, 26-5), un espace libre de préférence central (27) qui forme une coupure entre une zone de début et une zone de fin du creux linéaire raccourci (26-2, 26-3, 26-4).

**10.** Mesure matérialisée (10) selon l'une des revendications précédentes, laquelle mesure matérialisée comporte en outre une piste de référence (30) qui est disposée parallèlement à côté de la piste incrémentale (20) et qui est conçue pour indiquer une position absolue d'une tête de mesure le long de la mesure matérialisée (10).

**11.** Mesure matérialisée (10) selon la revendication 10, dans laquelle la piste de référence (30) comporte des zones de diffusion de référence (33) et des zones de réflexion de référence (34) disposées en alternance dans le sens de la longueur (x), les zones de diffusion de référence (33) de la piste de référence (30) comportant à chaque fois une multiplicité de creux linéaires (36-1, 36-2, 36-3, 36-4, 36-5, 36-6) qui sont conçus pour réfléchir de manière diffuse une lumière incidente et les zones de réflexion (34) de la piste de référence (30) présentant une surface globalement lisse.

**12.** Codeur incrémental qui comporte ce qui suit :

• une mesure matérialisée (10) selon l'une des revendications précédentes ; ainsi que
• au moins un dispositif capteur (101) qui est conçu pour balayer optiquement la piste incrémentale (20) de la mesure matérialisée (10).

**13.** Codeur incrémental selon la revendication 12, dans lequel l'au moins un dispositif capteur (101) comporte une tête de mesure mobile par rapport à la mesure matérialisée (10) avec un dispositif de projection optique (104) destiné à produire une image de la piste incrémentale (20) ainsi qu'avec une multiplicité de capteurs optiques (103) destinés à détecter l'image et dans lequel le dispositif capteur (101) est conçu de telle sorte que les capteurs optiques (103) produisent un signal de sortie sinusoïdal lors de la détection de l'image.

**14.** Codeur incrémental selon la revendication 13, dans lequel le dispositif de projection (104) du dispositif capteur (101) destiné à produire un signal de sortie sinusoïdal comporte un diaphragme de balayage globalement elliptique.

**15.** Codeur incrémental selon la revendication 13, dans lequel les capteurs optiques (103) du dispositif capteur (101) destiné à produire un signal de sortie sinusoïdal comportent une surface de capteur globalement elliptique.

**16.** Procédé pour appliquer une mesure matérialisée (10) selon l'une des revendications 1 à 11 sur une surface métallique (11), lequel procédé comporte les étapes suivantes :

• fournir un laser pulsé (50) destiné à produire un rayon laser (40) ;
• appliquer sur la surface métallique (11) un rayon laser (40) du laser (50) de manière à créer une zone de diffusion (23) à partir d'au moins deux creux linéaires (26-1, 26-2, 26-3, 26-4, 26-5), laquelle zone de diffusion a - dans le sens de la longueur (x) de la piste incrémentale (20) - une largeur ($B_{23}$) qui est inférieure à la moitié du pas (P) de la mesure matérialisée (10),

lequel procédé comporte en outre ce qui suit :

• appliquer sur la surface métallique (11) un rayon laser (40) pour la durée d'une première impulsion de laser de manière à créer un premier creux (25) globalement rond ;
• déplacer le rayon laser (40) perpendiculairement au sens de la longueur (x) de la piste incrémentale (20) et appliquer sur la surface métallique une deuxième impulsion de laser de manière à produire un autre creux (25) globalement rond dans une nouvelle position de déplacement,

le rayon laser (40) étant déplacé entre les impulsions individuelles à chaque fois perpendiculairement au sens de la longueur (x) de la piste incrémentale (20) de telle sorte que les creux (25) globalement ronds se chevauchent et qu'il se forme l'un des au moins deux creux linéaires (26-1, 26-2, 26-3, 26-4, 26-5) qui est orienté globalement perpendiculairement au sens de la longueur (x) de la piste incrémentale (20).

**17.** Procédé selon la revendication 16, dans lequel le rayon laser (40) présente un faisceau laser globalement rond et est choisi de telle sorte que les creux globalement ronds ont un diamètre de 3,5 μm à 12 μm, de préférence de 6 μm à 9 μm, et en particulier de 7 μm environ.

18. Procédé selon la revendication 16,
dans lequel le rayon laser (40), avant l'application sur la surface métallique (11), est guidé par l'intermédiaire d'un élément de masquage (64) qui comporte au moins deux ouvertures linéaires (66-1, 66-2, 66-3) et dans lequel une image des ouvertures linéaires (66-1, 66-2, 66-3) est reproduite de telle sorte par le rayon laser (40) sur la surface métallique (11) qu'il se forme au moins une zone de diffusion à partir d'au moins deux creux linéaires (26-1, 26-2, 26-3, 26-4, 26-5).

19. Procédé selon l'une des revendications 16 à 18,
dans lequel le laser (50) fonctionne avec une puissance telle que les creux linéaires (26-1, 26-2, 26-3, 26-4, 26-5) ont une profondeur de 0,5 μm environ.

20. Procédé selon l'une des revendications 16 à 19,
dans lequel le laser (50) fonctionne avec une fréquence de pulsation de 60 kHz environ.

*Fig. 1a*
*(Stand der Technik)*

*Fig. 1b*
*(Stand der Technik)*

200

201

*Fig. 1c*
*(Stand der Technik)*

*Fig. 1d*
*(Stand der Technik)*

*Fig. 1e*
*(Stand der Technik)*

_Fig. 2a_

_Fig. 2b_

## Kontrast in Abhängigkeit der Streubereichbreite

*Fig. 3*

*Fig. 4*

*Fig. 5a*

*Fig. 5b*

*Fig. 5c*

*Fig. 6*

_Fig. 7_

_Fig. 8_

_Fig. 9a_

*Fig. 9b*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2515574
- DE 102007007311
- DE 19608937 A1
- EP 2381222 A1